# EUROPEAN PATENT APPLICATION

(11) **EP 4 322 695 A1**
(43) Date of publication of application: **14.02.2024**
(21) Application number: 22190171.3
(22) Date of filing: 12.08.2022
(51) Int. Cl.: H04W 76/15, H04W 52/02, H04W 72/23, H04W 76/28, H04W 88/06

(54) **USER EQUIPMENT AND BASE STATION**

(71) Applicant: Panasonic Intellectual Property Corporation of America, Torrance, CA 90504 (US)
(72) Inventor: LI, Hongchao, 63225 Langen (DE); SUZUKI, Hidetoshi, Osaka, 571-8501 (JP)
(74) Representative: Grünecker Patent- und Rechtsanwälte PartG mbB

(57) **Abstract**

Some exemplary embodiments relate to a user equipment, UE, a base station and respective methods for a UE and a base station. For example, the UE comprises a transceiver which, in operation, receives two or more configuration indicators, each indicating a configuration of a periodic timing pattern including ON periods. The UE. For example, further comprises circuitry which, in operation, causes the transceiver to receive and/or to transmit a signal based on the two or more configuration indicators. In another example, the UE comprises a transceiver which, in operation, receives an idle mode discontinuous reception, I-DRX, configuration indicator indicating an I-DRX configuration. The UE, for example, further comprises circuitry which, in operation, causes the transceiver to receive and/or transmit a signal during ON periods, in radio resource control, RRC, idle mode, in RRC inactive mode and in RRC connected mode, according to the I-DRX configuration.

## Description

### BACKGROUND

### 1. Technical field

The present disclosure relates to transmission and reception of signals in communication systems, such as 3GPP communication systems. In particular, the present disclosure relates to methods and apparatuses for such transmission and reception.

### 2. Description of the Related Art

The 3rd Generation Partnership Project (3GPP) works at technical specifications for the next generation cellular technology, which is also called fifth generation (5G) including "New Radio" (NR) radio access technology (RAT), which operates in frequency ranges up to 100 GHz. The NR is a follower of the technology represented by Long Term Evolution (LTE) and LTE Advanced (LTE-A).

For systems like LTE and NR, further improvements and options may facilitate increasing network energy saving capabilities.

### SUMMARY

One non-limiting and exemplary embodiment facilitates increasing the efficiency of resource usage, in particular in scenarios with periodic traffic.

In an embodiment, the techniques disclosed here feature a user equipment, UE. The UE comprises a transceiver which, in operation, receives two or more configuration indicators, each indicating a configuration of a periodic timing pattern including ON periods. The UE further comprises circuitry, which, in operation, causes the transceiver to receive and/or transmit a signal based on the two or more configuration indicators.

In a further embodiment, the techniques disclosed here feature a user equipment, UE. The UE comprises a transceiver which, in operation, receives an idle mode discontinuous reception, I-DRX, configuration indicator indicating an I-DRX configuration. The UE further comprises circuitry which, in operation, causes the transceiver to receive and/or transmit a signal during ON periods, in radio resource control, RRC, idle mode, in RRC inactive mode and in RRC connected mode, according to the I-DRX configuration.

It should be noted that general or specific embodiments may be implemented as a system, a method, an integrated circuit, a computer program, a storage medium, or any selective combination thereof.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system;
- **Fig. 2**: is a schematic drawing that shows a functional split between NG-RAN and 5GC;
- **Fig. 3**: is a sequence diagram for RRC connection setup/reconfiguration procedures;
- **Fig. 4**: is a schematic drawing showing usage scenarios of Enhanced mobile broadband (eMBB), Massive Machine Type Communications (mMTC) and Ultra Reliable and Low Latency Communications (URLLC);
- **Fig. 5**: is a block diagram showing an exemplary 5G system architecture for a non-roaming;
- **Fig. 6**: illustrates a simplified and exemplary implementation of a set of synchronization signal blocks distributed in a half-frame.
- **Fig. 7**: illustrates several beams and the corresponding SSB index, SSB1-SSB8, and how the beams are transmitted by the gNB in a beam-sweeping manner.
- **Fig. 8**: illustrates a general, simplified and exemplary block diagram of a user equipment and a base station.
- **Fig. 9**: illustrates methods performed by a user equipment and a base station according to exemplary first to fourth embodiments.
- **Fig. 10**: illustrates a cell specific C-DRX configuration and multiple C-DRX configurations of respective UE groups.
- **Fig. 11**: illustrates methods performed by a user equipment and a base station according to an exemplary fifth embodiment.
- **Fig. 12**: illustrates a method according to the embodiments, wherein no DCI is used for indicating a DRX configuration to be followed by a UE.
- **Fig. 13**: illustrates a further method according to the embodiments, wherein a DCI is used for indicating a DRX configuration to be followed by a UE.

### DETAILED DESCRIPTION

### 5G NR system architecture and protocol stacks

3GPP has been working at the next release for the 5th generation cellular technology, simply called 5G, including the development of a new radio access technology (NR) operating in frequencies ranging up to 100 GHz. The first version of the 5G standard was completed at the end of 2017, which allows proceeding to 5G NR standard-compliant trials and commercial deployments of smartphones.

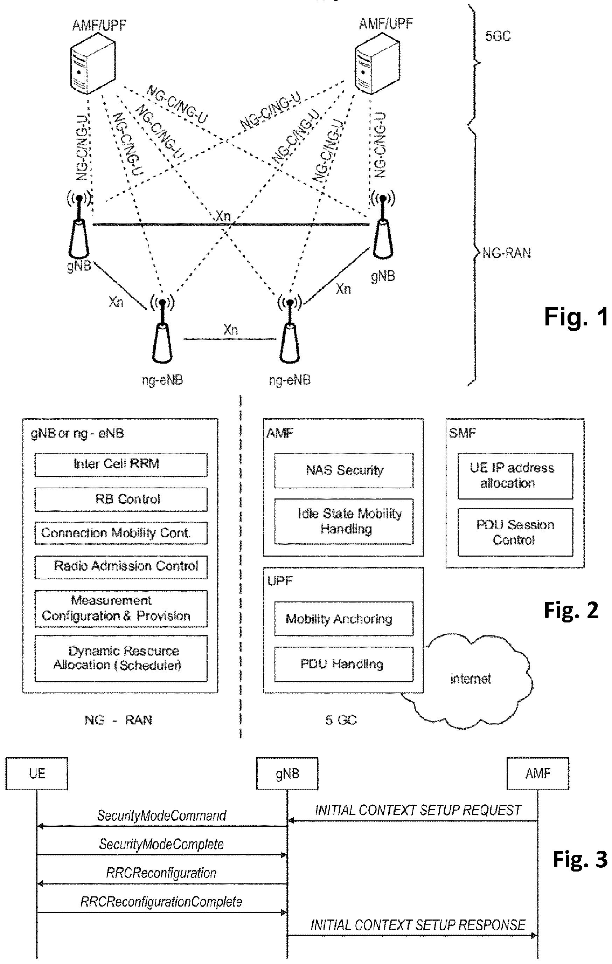

Among other things, the overall system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in Fig. 1 (see e.g. 3GPP TS 38.300 v15.6.0, section 4).

The user plane protocol stack for NR (see e.g. 3GPP TS 38.300, section 4.4.1) comprises the PDCP (Packet Data Convergence Protocol, see section 6.4 of TS 38.300), RLC (Radio Link Control, see section 6.3 of TS 38.300) and MAC (Medium Access Control, see section 6.2 of TS 38.300) sublayers, which are terminated in the gNB on the network side. Additionally, a new access stratum (AS) sublayer (SDAP, Service Data Adaptation Protocol) is introduced above PDCP (see e.g. sub-clause 6.5 of 3GPP TS 38.300). A control plane protocol stack is also defined for NR (see for instance TS 38.300, section 4.4.2). An overview of the Layer 2 functions is given in sub-clause 6 of TS 38.300. The functions of the PDCP, RLC and MAC sublayers are listed respectively in sections 6.4, 6.3, and 6.2 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For instance, the physical channels are PRACH (Physical Random Access Channel), PUSCH (Physical Uplink Shared Channel) and PUCCH (Physical Uplink Control Channel) for uplink and PDSCH (Physical Downlink Shared Channel), PDCCH (Physical Downlink Control Channel) and PBCH (Physical Broadcast Channel) for downlink.

Use cases / deployment scenarios for NR could include enhanced mobile broadband (eMBB), ultra-reliable low-latency communications (URLLC), massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability (1-10-5 within 1ms). Finally, mMTC may preferably require high connection density (1,000,000 devices/km2 in an urban environment), large coverage in harsh environments, and extremely long-life battery for low-cost devices (15 years).

Therefore, the OFDM numerology (e.g. subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15kHz, 30kHz, 60 kHz... are being considered at the moment. The symbol duration Tu and the subcarrier spacing Δf are directly related through the formula Δf = 1 / Tu. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPPTS 38.211 e.g. v17.1.0, e.g. section 4). For instance, downlink and uplink transmissions are organized into frames with 10ms duration, each frame consisting of ten subframes of respectively 1ms duration. In 5G NR implementations the number of consecutive OFDM symbols per subframe depends on the subcarrier-spacing configuration. For example, for a 15-kHz subcarrier spacing, a subframe has 14 OFDM symbols (similar to an LTE-conformant implementation, assuming a normal cyclic prefix). On the other hand, for a 30-kHz subcarrier spacing, a subframe has two slots, each slot comprising 14 OFDM symbols.

### 5G NR functional split between NG-RAN and 5GC

Fig. 2 illustrates functional split between NG-RAN and 5GC. NG-RAN logical node is a gNB or ng-eNB. The 5GC has logical nodes AMF, UPF and SMF.

In particular, the gNB and ng-eNB host the following main functions:
- Functions for Radio Resource Management such as Radio Bearer Control, Radio Admission Control, Connection Mobility Control, Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of User Plane data towards UPF(s);
- Routing of Control Plane information towards AMF;
- Connection setup and release;
- Scheduling and transmission of paging messages;
- Scheduling and transmission of system broadcast information (originated from the AMF or OAM);
- Measurement and measurement reporting configuration for mobility and scheduling;
- Transport level packet marking in the uplink;
- Session Management;
- Support of Network Slicing;
- QoS Flow management and mapping to data radio bearers;
- Support of UEs in RRC_INACTIVE state;
- Distribution function for NAS messages;
- Radio access network sharing;
- Dual Connectivity;
- Tight interworking between NR and E-UTRA.

The Access and Mobility Management Function (AMF) hosts the following main functions:
- Non-Access Stratum, NAS, signalling termination;
- NAS signalling security;
- Access Stratum, AS, Security control;
- Inter Core Network, CN, node signalling for mobility between 3GPP access networks;
- Idle mode UE Reachability (including control and execution of paging retransmission);
- Registration Area management;
- Support of intra-system and inter-system mobility;
- Access Authentication;
- Access Authorization including check of roaming rights;
- Mobility management control (subscription and policies);
- Support of Network Slicing;
- Session Management Function, SMF, selection.

Furthermore, the User Plane Function, UPF, hosts the following main functions:
- Anchor point for Intra-/Inter-RAT mobility (when applicable);
- External PDU session point of interconnect to Data Network;
- Packet routing & forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane, e.g. packet filtering, gating, UL/DL rate enforcement;
- Uplink Traffic verification (SDF to QoS flow mapping);
- Downlink packet buffering and downlink data notification triggering.

Finally, the Session Management function, SMF, hosts the following main functions:
- Session Management;
- UE IP address allocation and management;
- Selection and control of UP function;
- Configures traffic steering at User Plane Function, UPF, to route traffic to proper destination;
- Control part of policy enforcement and QoS;
- Downlink Data Notification.

### RRC connection setup and reconfiguration procedures

**Fig. 3** illustrates some interactions between a UE, gNB, and AMF (a 5GC entity) in the context of a transition of the UE from RRC_IDLE to RRC_CONNECTED for the NAS part (see e.g. TS 38.300 v15.6.0).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### Usage Scenarios of IMT for 2020 and beyond

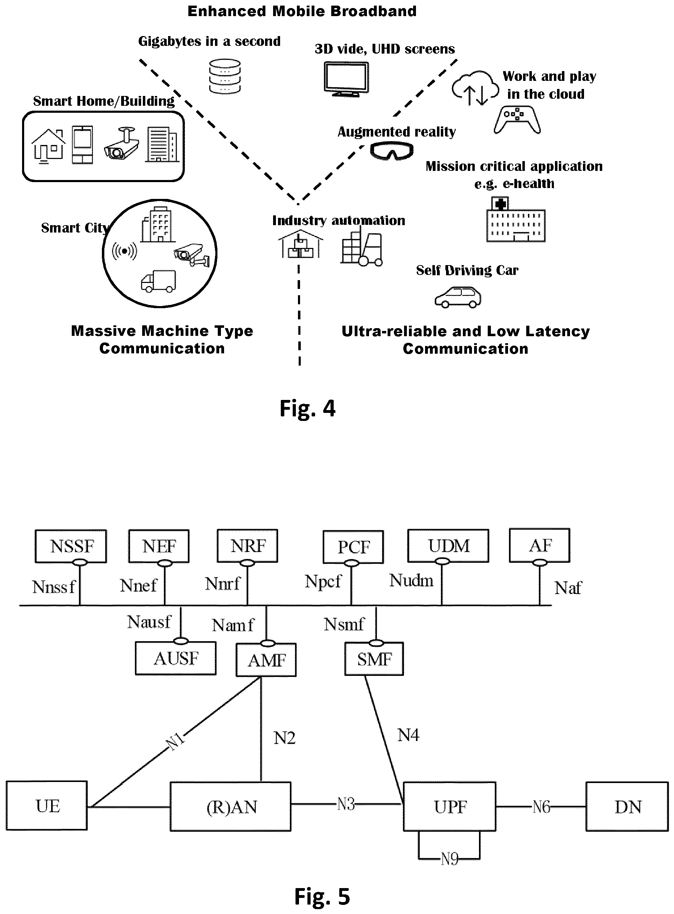

**Fig. 4** illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications. Fig. 4 illustrates some examples of envisioned usage scenarios for IMT for 2020 and beyond (see e.g. ITU-R M.2083 Fig.2).

The URLLC use case has stringent requirements for capabilities such as throughput, latency and availability and has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements set by TR 38.913. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1ms.

From the physical layer perspective, reliability can be improved in a number of possible ways. The current scope for improving the reliability involves defining separate CQI tables for URLLC, more compact DCI formats, repetition of PDCCH, etc. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency / higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, and especially necessary for URLLC and mMTC, is high reliability or ultra-reliability. Several mechanisms can be considered to improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability in general, regardless of particular communication scenarios.

For NR URLLC, further use cases with tighter requirements have been identified such as factory automation, transport industry and electrical power distribution, including factory automation, transport industry, and electrical power distribution. The tighter requirements are higher reliability (up to 10⁻⁶ level), higher availability, packet sizes of up to 256 bytes, time synchronization down to the order of a few µs where the value can be one or a few µs depending on frequency range and short latency in the order of 0.5 to 1 ms in particular a target user plane latency of 0.5 ms, depending on the use cases.

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also PUSCH enhancements related to mini-slot level hopping and retransmission/repetition enhancements have been identified. The term "mini-slot" refers to a Transmission Time Interval (TTI) including a smaller number of symbols than a slot (a slot comprising fourteen symbols).

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g. as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

**Fig. 5** illustrates a 5G NR non-roaming reference architecture (see TS 23.501 v16.1.0, section 4.23). An Application Function (AF), e.g. an external application server hosting 5G services, exemplarily described in Fig. 4, interacts with the 3GPP Core Network in order to provide services, for example to support application influence on traffic routing, accessing Network Exposure Function (NEF) or interacting with the Policy framework for policy control (see Policy Control Function, PCF), e.g. QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

**Fig. 5** shows further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g. operator services, Internet access or 3rd party services. All of or a part of the core network functions and the application services may be deployed and running on cloud computing environments.

In the present disclosure, thus, an application server (for example, AF of the 5G architecture), is provided that comprises a transmitter, which, in operation, transmits a request containing a QoS requirement for at least one of URLLC, eMMB and mMTC services to at least one of functions (for example NEF, AMF, SMF, PCF,UPF, etc) of the 5GC to establish a PDU session including a radio bearer between a gNodeB and a UE in accordance with the QoS requirement and control circuitry, which, in operation, performs the services using the established PDU session.

### Control Signals

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sildelink control information (SCI) or the 2nd stage SCI.

### Base Station

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well.

### Uplink/Downlink/Sidelink

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### Data Channels/Control Channels

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### Reference Signals

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### Time Intervals

In the present disclosure, time resource units are not limited to one or a combination of slots and symbols, and may be time resource units, such as frames, superframes, subframes, slots, time slot subslots, minislots, or time resource units, such as symbols, Orthogonal Frequency Division Multiplexing (OFDM) symbols, Single Carrier-Frequency Division Multiplexing Access (SC-FDMA) symbols, or other time resource units. The number of symbols included in one slot is not limited to any number of symbols exemplified in the embodiment(s) described above, and may be other numbers of symbols.

### Frequency Bands

The present disclosure may be applied to any of a licensed band and an unlicensed band.

### Communication

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### Antenna Ports

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

### Downlink control channel monitoring, PDCCH, DCI

Many of the functions operated by the UE involve the monitoring of a downlink control channel (e.g. the PDCCH, see 3GPP TS 38.300 v15.6.0, section 5.2.3) to receive e.g. particular control information or data destined to the UE.

A non-exhaustive list of these functions is given in the following:
- a paging message monitoring function,
- a system information acquisition function,
- signalling monitoring operation for a Discontinued Reception, DRX, function,
- inactivity monitoring operation for a Discontinued Reception, DRX, function,
- random access response reception for a random access function,
- reordering function of a Packet Data Convergence Protocol, PDCP, layer.

As mentioned above, the PDCCH monitoring is done by the UE so as to identify and receive information intended for the UE, such as the control information as well as the user traffic (e.g. the DCI on the PDCCH, and the user data on the PDSCH indicated by the PDCCH).

Control information in the downlink (can be termed downlink control information, DCI) has the same purpose in 5G NR as the DCI in LTE, namely being a special set of control information that e.g. schedules a downlink data channel (e.g. the PDSCH) or an uplink data channel (e.g. PUSCH). In 5G NR there are a number of different DCI Formats defined already (see TS 38.212 v15.6.0 section 7.3.1).

Said DCI formats represent predetermined formats in which respective information is formed and transmitted. In particular, DCI formats 0_1 and 1_1 are used for scheduling PUSCH and PDSCH, respectively, in one cell.

The PDCCH monitoring of each of these functions serves a particular purpose and is thus started to said end. The PDCCH monitoring is typically controlled at least based on a timer, operated by the UE. The timer has the purpose of controlling the PDCCH monitoring, e.g. limiting the maximum amount of time that the UE is to monitor the PDCCH. For instance, the UE may not need to indefinitely monitor the PDCCH, but may stop the monitoring after some time so as to be able to save power.

As mentioned above, one of the purposes of DCI on the PDCCH is the dynamic scheduling of resources in downlink or uplink or even sidelink. In particular, some formats of DCI are provided to carry indication of resources (resource allocation, RA) allocated to a data channel for a particular user. The resource allocation may include specification of resources in frequency domain and/or time domain.

### Control information - Search space sets

PDCCH monitoring is done by the UE so as to identify and receive information intended for the UE, such as the control information as well as the user traffic (e.g. the DCI on the PDCCH, and the user data on the PDSCH indicated by the PDCCH).

Control information in the downlink (can be termed, e.g., downlink control information, DCI) has basically the same purpose in 5G NR as the DCI in LTE, namely being a special set of control information that e.g. schedules a downlink data channel (e.g. the PDSCH) or an uplink data channel (e.g. PUSCH). In an exemplary 5G NR compliant implementation, there are a number of different DCI formats defined already (see TS 38.212 e.g. v17.1.0 section 7.3.1). An overview is given by the following table.

| **DCI format** | **Usage** |
|---|---|
| 0 0 | Scheduling of PUSCH in one cell |
| 0 1 | Scheduling of PUSCH in one cell |
| 0 2 | Scheduling of PUSCH in one cell |
| 1_0 | Scheduling of PDSCH in one cell |
| 1_1 | Scheduling of PDSCH in one cell |
| 1_2 | Scheduling of PDSCH in one cell |
| 2 0 | Notifying a group of UEs of the slot format |
| 2_1 | Notifying a group of UEs of the PRB(s) and OFDM symbol(s) where UE may assume no transmission is intended for the UE |
| 2 2 | Transmission of TPC commands for PUCCH and PUSCH |
| 2_3 | Transmission of a group of TPC commands for SRS transmissions by one or more UEs |
| 2 4 | Cancel UL transmission |
| 2 5 | Notify availability of soft resources |
| 2 6 | Notify power saving information |
| 3 0 | Scheduling for Sidelink, NR PSCCH and NR PSSCH in one cell; |
| 3_1 | Scheduling for Sidelink; LTE PSCCH and LTE PSSCH in one cell |

In 5G NR, PDCCH is transmitted in radio resource regions called control resource sets (CORESETs). In LTE, the concept of a CORESET is not explicitly present. Instead, PDCCH in LTE uses the full carrier bandwidth in the first 1-3 OFDM symbols (four for the most narrowband case). By contrast, a CORESET in 5G NR can occur at any position within a slot and anywhere in the frequency range of the carrier, except that the UE is not expected to handle CORESETs outside its active bandwidth part (BWP).

Accordingly, a UE performs a monitoring operation of the PDCCH, e.g. as defined in 3GPP TS 38.213 e.g. version 17.1.0, sections 10 and 11. As exemplarily defined therein, the UE monitors a set of PDCCH candidates, which is defined in terms of PDCCH search space sets. A search space set can be a common search space set (CSS set) or a UE-specific search space set (USS set).

As defined exemplarily by 3GPP TS 38.213, section 10.1, a UE monitors PDCCH candidates in one or more of the following CSS and USS sets:
- a Type0-PDCCH CSS set configured by *pdcch-ConfigSIB1* in *MIB* or by *searchSpaceSIB1* in *PDCCH-ConfigCommon* or by *searchSpaceZero* in *PDCCH-ConfigCommon* for a DCI format with CRC scrambled by a SI-RNTI on the primary cell of the MCG
- a Type0A-PDCCH CSS set configured by *searchSpaceOtherSystemlnformation* in *PDCCH-ConfigCommon* for a DCI format with CRC scrambled by a SI-RNTI on the primary cell of the MCG
- a Type1-PDCCH CSS set configured by *ra-SearchSpace* in *PDCCH-ConfigCommon* for a DCI format with CRC scrambled by a RA-RNTI, a MsgB-RNTI, or a TC-RNTI on the primary cell
- a Type2-PDCCH CSS set configured by *pagingSearchSpace* in *PDCCH-ConfigCommon* for a DCI format with CRC scrambled by a P-RNTI on the primary cell of the MCG
- a Type3-PDCCH CSS set configured by *SearchSpace* in *PDCCH-Config* with *searchSpaceType = common* for DCI formats with CRC scrambled by INT-RNTI, SFI-RNTI, TPC-PUSCH-RNTI, TPC-PUCCH-RNTI, TPC-SRS-RNTI, or CI-RNTI and, only for the primary cell, C-RNTI, MCS-C-RNTI, CS-RNTI(s), or PS-RNTI and
- a USS set configured by *SearchSpace* in *PDCCH-Config* with *searchSpaceType = ue-Specific* for DCI formats with CRC scrambled by C-RNTI, MCS-C-RNTI, SP-CSI-RNTI, CS-RNTI(s), SL-RNTI, SL-CS-RNTI, or SL Semi-Persistent Scheduling V-RNTI.

Search space sets are monitored in one or more CORESETs on the active DL BWP on each activated serving cell configured with PDCCH monitoring using the corresponding search space sets, where monitoring implies decoding each PDCCH candidate according to the monitored DCI formats.

### Time-domain in 5G NR

In the time domain, transmissions in 5G NR are organized into frames of length 10ms, each of which is divided into 10 equally sized subframes of length 1ms. A subframe in turn is divided into one or more slots consisting of 14 OFDM symbols each. The duration of a slot in milliseconds depends on the numerology. For instance, for the 15 kHz subcarrier spacing, an NR slot thus has the same structure as an LTE subframe with normal cyclic prefix. A subframe in 5G NR serves as a numerology-independent time reference, which is useful, especially in the case of multiple numerologies being mixed on the same carrier, while a slot is the typical dynamic scheduling unit.

5G NR provides a plurality of slot formats, and a slot format indicates how each of the symbols within a single slot is used. It defines which symbols within a specific slot are used for uplink and which symbols are used for downlink. In LTE TDD, if a subframe (equivalent to a slot in NR) is configured for DL or UL, all of the symbols within the subframe should be used as DL or UL. But in NR, each of the symbols within a slot can be configured differently as DL or UL. Also flexible symbols exist, which can be configured as DL or UL. In the exemplary 5G NR compliant implementation, the gNB uses a slot format indicator (SFI) to inform the UE about the slot format to be used (see also TS 38.213 v16.7.0 section 11.1.1). For instance, the slot format indicator includes an index value, associated with a slot format (e.g. in the form of a table).

### Synchronization Signal Block measurement timing configuration - SMTC - PSS/SSS, PBCH

NR has introduced the so-called synchronization signal block, SS block (SSB), which comprises a Primary Synchronization Signal (PSS), a Secondary Synchronization Signal (SSS), and a Physical Broadcast CHannel (PBCH) (in fact PBCH DMRS and PBCH data). The PSS and SSS can be used by UEs to find, synchronize to and identify a network. The PBCH carries a minimum amount of system information including an indication where the remaining broadcast system information is transmitted.

In LTE, these three signals were also used, the PSS, SSS, and PBCH, although not as being part of one SSB. The three SSB components are always transmitted together in NR, e.g. they have the same periodicity. A given SSB may be repeated within an SS burst set, which can be potentially used for a gNB beam-sweeping transmission. The SS burst set may be confined to a particular time period, such as a 5ms window (half-frame). For initial cell selection, the UE may assume a default SS burst set periodicity of 20 ms.

The 5G NR PSS is a Physical Layer specific signal to identify the radio frame boundary and is type of an m-sequence. The 5G NR SSS is also a Physical-Layer specific signal to identify the subframe boundary and is also an m-sequence. The PSS/SSS sequence is defined in 3GPP TS 38.212 and is composed complex values used by each element/sample of the sequence. Information on the current exemplary 5G implementation of the PSS and SSS is available from TS 38.211 v16.7.0 sections 7.4.2 and 7.4.3, including the respective sequence generation and mapping to physical resources.

The time-frequency structure of an SS/PBCH block, carrying the SSS is described in the TS 38.211 section 7.4.3.1. In such an exemplary 5G implementation, in the time domain, an SS/PBCH block consists of 4 OFDM symbols, numbered in an increasing order from 0 to 3. The distribution of the PSS, SSS and PBCH signals within the SS/PBCH block is defined by Table 7.4.3.1-1.

In the frequency domain, an SS/PBCH block consists of 240 contiguous subcarriers, indexed with 0 to 239. The exact subcarriers to be used for each PSS, SSS and PBCH signal within the SS/PBCH block is also defined by Table 7.4.3.1-1.

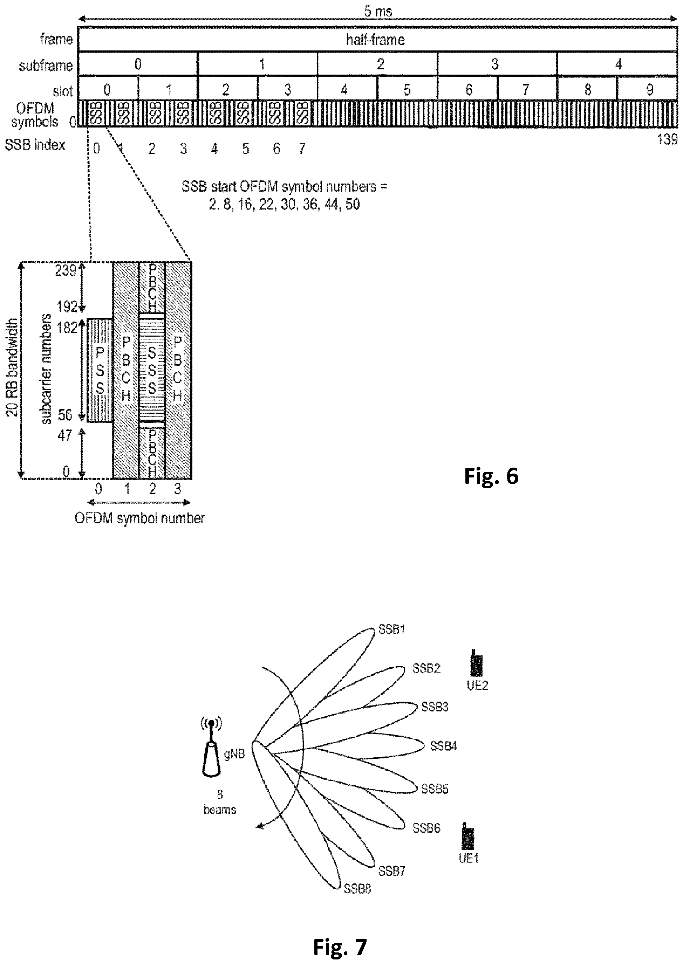

A simplified and exemplary illustration of the SSB according to the above definitions is illustrated in **Fig. 6****,** which shows at the bottom part the PSS, SSS, and PBCH in the time and frequency domain.

The timing (OFDM symbols) at which the SS-blocks (see Fig. 6) are transmitted by the gNB can be defined differently. In particular, the first symbol indexes (within each half-frame with an SSB) with which a candidate SSB starts is determined according to 3GPP 38.213 v16.7.0, section 4.1 "Cell search". In this example 5G NR implementation, the first symbol indexes depend on the SCS (e.g. 15 kHz, 30 kHz, 120 kHz, 240kHz), the type of channel access (e.g. without shared spectrum channel access, with shared spectrum channel access), and the carrier frequencies (e.g. < 3GHz, >3GHz, < 1.88 GHz, >1.88GHz, < 6GHz, >6GHz). An example set of SSBs is illustrated in Fig. 6, assuming start OFDM symbols of 2, 8, 16, 22, 30, 36, 44, and 50 (case of SCS=30 kHz, and frequency > 3 GHz), wherein the relevant OFDM symbol numbering starts with 0 in a half frame. The number of SSBs in a set of SSBs can also be limited to a maximum Lmax. In one example, the SSB set can comprise 4, 8 or 64 SSBs.

The time-domain periodicity can be defined in the *ServingCellConfigCommon* or *ServingCellConfigCommonSIB* lEs using the field ssb-periodictyServingCell, among the values ms5, ms10, ms20, ms40, ms80, ms160.

The candidate SS/PBCH blocks in a half frame (e.g. termed a set of SSBs) are indexed in an ascending order in time from 0 to *Lmax* - 1. Correspondingly, each SSB within a set of SSBs is assigned a unique number (starting from 0 and increasing by 1).

The SSB set illustrated above in Fig. 6 shows a case where all the possible candidate SSBs are indeed transmitted by the base station. However, it is not required to transmit all SSBs. Rather, the gNB, based on some requirements, may select only some of those SSBs within a set of SSBs and transmit those. The SSBs that are actually transmitted by the SSB can be called the SSB pattern. The SSB pattern has basically the same characteristics as the corresponds set of SSBs, including periodicity.

The gNB informs the UE about the SSB pattern, i.e. which SSBs are in fact transmitted and which are not. This can be done e.g. by the gNB transmitting an SSB bitmap, which defines the SSB pattern, wherein each bit of the SSB bitmap.

The length of the SSB bitmap depends on the applicable SSB set, e.g. 4, 8, or 64 bits.

According to one example option, the information element *ssb-PositionslnBurst* of the RRC protocol can be transmitted as part of the *ServingCellConfigCommon* and *ServingCellConfigCommonSIB* information elements (see 3GPP TS 38.331 v16.6.0, section 6.3.2). The *ssb-PositionslnBurst* IE indicates the time domain positions of the transmitted SSBs in an SS burst. A bitmap can be used for the indication, e.g. {1,1,1,1,1,1,1,1} means all 8 SSBs of the set are transmitted, or {1,0,1,0,1,0,1,0} means only 4 SSBs of the set are transmitted particularly with the SSB index #0, 2, 4, 6, out of 8 SSBs.

Two examples are provided in the following:

```
 ServingCellConfigCommon ::= SEQUENCE {
   ....,
  ssb-PositionslnBurst CHOICE {
     shortBitmap      BIT STRING (SIZE (4)),
     mediumBitmap      BIT STRING (SIZE (8)),
     longBitmap      BIT STRING (SIZE (64))
  },
  ssb-periodicityServingCell      ENUMERATED { ms5, ms10, ms20, ms40, ms80, ms160,
                              spare2, spare1 }
   
                              ServingCellConfigCommonSIB ::=      SEQUENCE {
  ssb-PositionslnBurst      SEQUENCE {
     inOneGroup      BIT STRING (SIZE (8)),
     groupPresence      BIT STRING (SIZE (8))      OPTIONAL
     --Cond Above6GHzOnly
  },
  ssb-periodicityServingCell      ENUMERATED { ms5, ms10, ms20, ms40, ms80, ms160,
                              spare2, spare1
}
```

} Among the SSBs defined in different bandwidth parts, one of them is defined as a Cell-Defining SSB, which is that SSB that is associated with an RMSI (Remaining Minimum System Information).

In brief, a set of candidate SSBs is configured for use by the gNB in the cell. Furthermore, among the set of candidate SSBs, the gNB can then select either all or fewer candidate SSBs to actually transmit, called an SSB pattern.

In one example, the transmission power to be used by the gNB for transmission of the SSBs can be informed to the UE by the higher layer parameter *ss-PBCH-BlockPower,* which can be found in TS 38.331. It defines an average EPRE (Energy per Resource Element) of the resource elements that carry secondary synchronization signals in dBm that the gNB uses for SSB transmission (see also TS 38.213, clause 7).The UE assumes that SSS, PBCH DM-RS, and PBCH data have same EPRE. The UE may assume that the ratio of PSS EPRE to SSS EPRE in a SS/PBCH block is either 0 dB or 3 dB.

All the SSBs can be transmitted with all beams in the system. Alternatively, the SSBs can be transmitted in different beams, e.g. when SSB beamforming is enabled. In that case, each SSB is transmitted on a different spatial beam, as illustrated in **Fig.** 7. Similar to the exemplary assumption of Fig. 6, there are 8 SSBs (0-7) which can respectively be transmitted in a different beam, each beam being transmitted in a different beam direction. Therefore, a beam-sweeping form of transmission of the SSBs is achieved; put differently, the sweeping transmission of the beams (and SSBs) is time-division multiplexed and occurs at different times. The two UEs, UE1 and UE2, will receive a different SSB at different times. Each beam has a beam index, e.g. where the beam index corresponds to the SSB index that is transmitted via said beam.

The UE uses the SSBs, and particularly the SSB signals (e.g. the PSS, SSS, PBCH) in different mechanism, such as for serving cell measurements, time / frequency synchronization etc.

### Quasi Co-location (QCL) /Transmission Configuration Indicator (TCI)

According to the definition of QCL in TS38.214 Sec 5.1.5, the UE can be configured with a list of up to *M TCI-State* configurations within the higher layer parameter *PDSCH-Config* to decode PDSCH according to a detected PDCCH with DCI intended for the UE and the given serving cell, where M depends on the UE capability *maxNumberConfiguredTCIstatesPerCC.* Each *TCI-State* contains parameters for configuring a quasi co-location relationship between one or two downlink reference signals (RS) and the DM-RS ports of the PDSCH, the DM-RS port of PDCCH or the CSI-RS port(s) of a CSI-RS resource. The quasi co-location relationship is configured by the higher layer parameter *qcl-Type1* for the first DL RS, and *qcl-Type2* for the second DL RS (if configured). For the case of two DL RSs, the QCL types shall not be the same, regardless of whether the references are to the same DL RS or different DL RSs. The quasi co-location types corresponding to each DL RS are given by the higher layer parameter *qcl-Type* in *QCL-Info* and may take one of the following values:
- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

When a RS (or, as mentioned above a RS resource) is QCLed with an SSB index, said SSB index may also referred to as the *QCL reference* of said RS (resource). Likewise, when a RS is QCLed with an SSB beam, said SSB beam may also be referred to as the *QCL reference* of said RS. In general, one, multiple, or each RS of the configured RSs may be QCLed with a respective SSB.

In particular, the QCL reference of the signalling including the availability indication may be the SSB index of the SSB with which the signalling is QCLed. For instance, as illustrated in Fig. **7****,** there may be 8 SSBs/beams #0 to #7. Each of the SSBs/beams may include an availability signalling (e.g. a L1 indication). Said signalling, accordingly, have QLC references #0 to #7, respectively.

It is further noted that the index of the SSB or *SSB index* can e.g. be (i) SSB index expressed by the absolute number (e.g. the absolute and continuous number counting of the SSB indices starting from 0 with the first index); (ii) SSB index of the actually transmitted beam, which is indicated by ssb-PositionslnBurst in SIB1; (iii) SSB index of the QCL indicated (e.g. indicated by SIB or RRC); (iv) an index of the beam transmitting/carrying the SSB (i.e. a beam index).

In 5G NR, a Transmission Configuration Indication (TCI) state is used to establish the Quasi co-location (QCL) connection between the target reference signal (RS) and the source RS. TCI states are configured for physical downlink control channel (PDCCH) or a physical downlink shared channel (PDSCH) in order to convey the QCL indication for the respective RS.

### UE power saving enhancements for NR

User experience is key to 5G/NR success, not only in terms of experienced data rates and latency but also importantly UE power consumption. UE Power saving enhancements are therefore vital to the success of 5G/NR. In Rel-16, several useful power saving schemes were specified, including power saving signal/DCI as enhancement to connected-mode DRX (cDRX or C-DRX), additional adaptations to maximum MIMO layer number, SCell dormancy behaviour and cross-slot scheduling as enhancements to BWP framework, RRM relaxation as enhancements for idle/inactive-mode power consumption, and UE assistance information.

In Rel-17, additional enhancements are required to address outstanding issues in Rel-16, including idle/inactive-mode power consumption in NR SA deployments, considering both eMBB UEs and Reduced Capability NR Devices, connected-mode power consumption with FR2 deployments, etc. One particular example is to study and specify extension(s) to Rel-16 DCI-based power saving adaptation during DRX Active Time for an active BWP, including PDCCH monitoring reduction when C-DRX is configured (RAN1).

Another power saving study item relates to XR-specific Power Saving in RAN 1 and RAN 2. In particular, power saving techniques are studied for XR (eXtended Reality), e.g. to accommodate XR service characteristics, such as periodicity, multiple flows, jitter, latency, reliability, etc. One technique could relate to enhancing PDCCH monitoring. A further study item relating to XR refers to XR-specific capacity improvements in RAN 1 and RAN 2, and involve studying mechanisms that provide more efficient resource allocation and scheduling for XR service characteristics, such as periodicity, multiple flows, jitter, latency, reliability, etc. Techniques could relate to SPS and CG enhancements and Dynamic scheduling/grant enhancements.

Energy saving can be implemented for the UE, including mechanisms for:
- a UE-specific BWP adaptation and use of a dormancy SCell (using DCI format 0_1 (for UL) and DCI format 1_1 (for DL),
- a UE or UE-group specific time domain adaptation by DRX and using the DCI format 2_6
- a UE-group-specific CSI-RS / TRS availability indication for IDLE/INACTIVE UEs by DCI format 2_7 and paging
- DCI-based PDCCH monitoring adaptation by PDCCH skipping and SSSG (Search Space Set Group) switching.

### Discontinuous reception - DRX

Packet-data is often highly bursty, with occasional periods of silence. From a delay perspective, it is beneficial to monitor the downlink control signaling permanently to receive uplink grants or downlink data transmissions and instantaneously react on changes in the traffic behavior. At the same time this comes at a cost in terms of power consumption at the device. To reduce the device power consumption, mechanisms for discontinuous reception (DRX) may be included.

The basic mechanism for DRX is a configurable DRX cycle in the device. With a DRX cycle configured, the device monitors the downlink control signaling only in an active period per DRX cycle, sleeping with the receiver circuitry switched off in the remaining inactive period. This allows for a significant reduction in power consumption. Naturally, this implies restrictions to the scheduler as the device can be addressed only in the ON periods.

DRX cycles may be configured in the LTE downlink so that the UE, by periodically switching off of a receiver, does not have to decode the physical downlink control channel (PDCCH) or receive physical downlink shared channel (PDSCH) transmission in certain periods, as defined, for instance, in 3GPP TS 36.321 ("Evolved Universal Terrestrial Radio Access (E-UTRA); Medium Access Control (MAC) protocol specification", version 15.5.0, section 5.7) for connected mode, and 3GPP TS 36.304 ("Evolved Universal Terrestrial Radio Access (E-UTRA); User Equipment (UE) procedures in idle mode", version 15.3.0, section 7.1) for idle mode.

According to the 3GPP TS 38.321 v15.5.0 specification, when a DRX cycle is configured, the active time includes times where a drx-onDurationTimer, a drx-InactivityTimer, a drx-RetransmissionTimerDL, a drx-RetransmissionTimerUL or a ra-ContentionResolutionTimer is running, as described in section 5.1.5 of 3GPP TS 38.321.

The drx-onDurationTimer defines the duration at the beginning of a DRX cycle, whereas the drx-InactivityTimer specifies the duration after the PDCCH occasion in which a PDCCH indicates a new uplink (UL) or downlink (DL) transmission for the MAC entity. The drx-RetransmissionTimerDL and -UL define the maximum duration until a DL retransmission is received and the maximum duration until a grant for UL retransmission is received, respectively.

Further, the active time includes times where a PDCCH indicating a new transmission addressed to the cell radio network temporary identifier (C-RNTI) of the MAC entity has not been received after successful reception of a Random Access Response for the Random Access Preamble not selected by the MAC entity among the contention-based Random Access Preamble, as described in section 5.1.4 of 3GPP TS 38.321 v15.5.0.

If a UE under RRC connected state is configured with DRX (cDRX/C-DCX), it monitors PDCCH periodically during a configured time duration which is called DRX OnDuration period. If there is no data scheduled, the UE can turn off its RF chain and enter into power saving state. If the UE detects a DCI indicating a new DL or UL transmission, DRX Inactivity Timer would be started. Until the DRX Inactivity Timer expires, the UE needs to keep monitoring PDCCH for the potential subsequent data scheduling.

For a UE under RRC idle/inactive state, the DRX mechanism is related to paging detection (iDRX/I-DRX). Specifically, the UE needs to detect paging occasion per DRX cycle for paging message and system information update.

The DRX mechanism is a tradeoff between UE power efficiency and data transmission latency. The tradeoff depends on the parameters related to inactivity timer, DRX OnDuration and DRX cycle. Overall, DRX mechanism is beneficial for lowering UE power consumption by allowing UEs to enter power saving mode periodically.

### Cell types - Primary Cell, Secondary Cell, Serving Cell

The term "cell" refers to a component carrier (CC) on which the allocable resources (such as timefrequency-space resources) are located. There may be more carriers used by a terminal, e.g. to increase the number of available resources. These CCs may be referred to as cells.

The primary cell (Pcell) operates on the primary frequency, which is the frequency on which the UE performs the initial connection establishment procedure, and/or initiates the connection reestablishment procedure. The Pcell may be the cell indicated explicitly in a handover procedure.

A secondary cell (Scell), operating on a secondary frequency, which may be configured once an RRC connection is established and which may be used to provide additional radio resources.

For a UE in RRC_CONNECTED not configured with carrier aggregation (CA) there is only one serving cell, which is the primary cell. For a UE in RRC_CONNECTED configured with CA, the term "serving cells" denotes the primary cell and all secondary cells.

In other words, a serving cell is a cell through which a UE is configured to transmit and/or receives data.

### Secondary cell (SCell) dormancy

SCell refers to frequency carriers in addition to the primary frequency carrier (PCell) by Carrier Aggregation (CA). The SCell may provide more data bandwidth in other carrier frequencies for boosting up data throughput while the PCell ensures coverage. In Rel-15 Enhancing LTE CA Utilization (euCA), a new SCell state, dormant SCell state, is introduced. SCells can become inactive for power saving when the data transmission requirement is not high.

If an SCell is in the dormant state, the UE stops monitoring PDCCH in the SCell, but activities such as CSI measurement/reporting and RRM measurement are not impacted. The transition in and out of SCell dormant state are achieved via Medium Access Control (MAC) signalling.

In Rel-16 NR, the dormancy behavior can be implemented at BWP level. The BWP that supports dormancy behaviour for the SCell is referred to as dormant BWP, where PDCCH monitoring occasion is not configured.

An SCell dormancy indication can be conveyed by DCI with different DCI formats for UEs to detect outside and within DRX Active Time. Within a DRX Active Time, the SCell dormancy indication field may be carried by DCI with DCI formats used by data scheduling (i.e. DCI format 0_1 and DCI format 1_1). The information fields that indicate dormancy behavior may be in the form of a bitmap, where each bit corresponds to one configured SCell group.

When a UE is outside of a DRX Active Time, the UE may detect DCI with DCI format 2_6 on the Primary Cell (PCell) or the Primary Secondary Cell (PSCell) for the SCell dormancy indication.

### PDCCH skipping

With a PDCCH skipping technique, a base station can send a DCI to indicate a UE to perform PDCCH skipping if there is no data to be transmitted to the UE. After the UE receives the indication, the UE may stop monitoring PDCCH to save power.

That is, the network dynamically signals the UE with an indication to safely skip monitoring the configured PDCCH control search space for either a certain duration or until they receive further indication to activate back PDCCH monitoring. This way, different UEs may be configured with the same PDCCH search space but with various monitoring patterns. Therefore, UEs, which have been configured of PDCCH skipping, assume that no traffic will be transmitted during the skipping duration.

### Search Space Set group (SSSG) switching

In 3GPP, the concept of configuring at least two groups of search space sets (abbreviated as SSS or SS set) for monitoring of the PDCCH has been discussed. This concept can be e.g. specifically useful for operation in the unlicensed radio spectrum, where the gNB has to first acquire the channel in order to then be allowed to transmit a PDCCH.

For instance, the different SSS groups can differ by when and/or how long the UE is required to monitor the PDCCH during a slot. The various groups may comprise various search space sets. A single search space set can be part of more than one SSS group.

The UE may be configured to switch between the groups, based on at least the following alternatives.

A first alternative would involve an implicit configuration, e.g. by the UE detecting e.g. a DL burst, a DM-RS (DeModulation Reference Signal), or a Wideband-DM-RS (WB-DM-RS), or a GC-PDCCH and/or a PDCCH and/or based on information on the COT structure. Here, it is exemplarily assumed that the UE derives the corresponding SSS group from the COT status of the gNB, e.g. when the UE is inside a COT of the gNB, the UE uses one particular SSS group, and when outside, the UE uses another particular SSS group. The beginning of the COT can be derived by the UE e.g. from explicit information (see e.g. above discussed COT indication) or implicitly from detection of a downlink transmission, such as one or more of the above-listed (DL burst, DM-RS, GC-PDCCH, PDCCH). On the other hand, the end of the COT can be derived by the UE e.g. from a COT duration indication bit-field in GC-PDCCH (with DCI format 2_0) or from SFI bit-field in GC-PDCCH (with DCI format 2_0).

A second alternative so as to instruct the UE to switch to a particular SSS group would involve an explicit indication, e.g. a bit field in the GC-PDCCH and/or PDCCH that indicates the SSS group index that the UE needs to monitor. If the SSS group index is different than the current one in use, UE knows the SSS group needs to be switched, e.g. as from the next slot boundary. This allows the gNB to have full control of the SSS group used by the UE. For instance, the gNB may decide to switch the SSS group without the need for crossing the boundary of a COT (e.g. inside or outside a COT).

### MIMO layer adaption

When a UE receives signal from base station, it can utilize multiple antennas to achieve receive diversity gain or combining gain for better performance. Meanwhile, the increased number of active antennas consumes more UE energy. As the data traffic arrives in burst, not all the antennas will always be applied. Hence, it may be beneficial to UE energy efficiency if some of the antennas can be indicated to be turned off when small data packet is transmitted or the channel state condition is good enough.

In Release 15, the DL maximum number of MIMO layers (Lmax) is configured per serving cell which is common to all the DL BWPs of the serving cell. In Release 16, the DL maximum number of MIMO layers can be separately configured for each DL BWP. The DL maximum number of MIMO layers can be changed through BWP switch which can reduce power consumption by adaptation to less number of receive antennas at UE side.

### Base station power saving enhancements for NR

As a Rel. 18 SI topic, network energy saving is under discussion. The discussion aims at exploring efficient gNB adaption based on the traffic and UE loads. That is, gNB may be optimized to reduce certain activities in some modules for energy savings. Such an optimization may or may not include further signalling or procedures impacting UE behaviour. The gNB adaption may be performed in time, frequency, spatial/antenna, and power domains.

For gNB power saving purpose, the current NR system supports certain power saving features. For example, gNB may indicate or configure a UE to skip a DRX OnDuration or to skip paging opportunities. Further, PDCCH monitoring may be adapted in time/frequency domain. Still further, the number of MIMO layers may be reduced.

In this respect, it is possible, by implementation, that gNB reuses the UE power saving signalling to achieve gNB energy saving, by muting some of the resources. However, such an operation may be inefficient in general by indicating all UEs with L1 UE-specific/group-common signalling to achieve network level energy saving.

Alternatively, all the UEs DRX configurations may be aligned with each other. However, matching the DRX configuration to each individual UE may have disadvantages withj respect to UE service quality and power consumption.

### Further improvements

In the above, the study item for network power saving was briefly presented. However, the current 5G NR releases cannot provide sufficient power saving for a gNB due to low efficiency and potential degradation of UE power consumption.

The present disclosure provides solutions for allowing for power saving enhancement of network entities like a base station, eNB or gNB.

### Embodiments

The inventors have identified possibilities for providing improved procedures, for allowing to avoid one or more of the above-described disadvantages. The present disclosure relates to different solutions and variants for such improved procedures. Accordingly, the present disclosure provides techniques for increasing power saving capabilites.

The present disclosure in particular provides base stations, corresponding methods for base stations, user equipments (UEs), corresponding methods for user equipments, communications systems comprising such base stations and user equipments, as well as integrated circuits which, in operation, control a processes of base station/user equipment to perform the respective methods.

In the following description of the embodiments, numeral values represent mere examples, wherein the present disclosure is not limited thereto. Further, the specific implementation of indicators, e.g. in a DCI, an RRC message or the like, are mere examples not limiting the disclosure.

### Terminology

In the following, UEs, base stations and procedures will be described for the new radio access technology envisioned for the 5G mobile communication systems, but which may also be used in LTE mobile communication systems or future mobile communication systems. Different implementations and variants will be explained as well. The following disclosure was facilitated by the discussions and findings as described above and may for example be based at least on part thereof.

In general, it should be noted that many assumptions have been made herein so as to be able to explain the principles underlying the present disclosure in a clear, concise and understandable manner. These assumptions are however to be understood as merely examples made herein for illustration purposes, which are not necessarily essential for the invention and should thus not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next communication systems is not fully decided yet or might finally change. Thus, terms could be changed in the future, without affecting the functioning of the embodiments. Consequently, a skilled person is aware that the embodiments and their scope of protection should not be restricted to particular terms exemplarily used herein for lack of newer or finally agreed terminology but should be more broadly understood in terms of functions and concepts that underlie the functioning and principles of the present disclosure. In particular:

### Terminal

A terminal or user terminal or user device or mobile station or mobile node is referred to in the LTE and NR as a user equipment (UE). This may be a mobile device or communication apparatus such as a wireless phone, smartphone, tablet computer, or an USB (universal serial bus) stick with the functionality of a user equipment. However, the term mobile device is not limited thereto, in general, a relay may also have functionality of such mobile device, and a mobile device may also work as a relay. For instance, a terminal is a physical entity (physical node) within a communication network. Still further, the communication device may be any machine-type communication device, such as loT device or the like. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

### Base Station

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit, a gateway or a scheduling device, for example. Further, in side link communication, a terminal may be adopted instead of a base station. The base station may be a relay apparatus that relays communication between a higher node and a terminal. The base station may be a roadside unit as well. A base station may be a scheduling node, a scheduling device or network node, e.g. forming a part of the network for providing services to terminals. In particular, a base station may provide wireless access to terminals. Communication between the terminal and the base station is typically standardized and may be defined by different layers, such as PHY, MAC, RRC etc. In LTE and NR, the wireless interface protocol stack includes physical layer, medium access layer (MAC) and higher layers. In control plane, higher-layer protocol Radio Resource Control protocol is provided. Via RRC, the base station can control configuration of the terminals and terminals may communicate with the base station to perform control tasks such as connection and bearer establishment, modification, or the like, measurements, and other functions. The terminology used in LTE is eNB (or eNodeB), while the currently used terminology for 5G NR is gNB. The term *"base station"* or *"radio base station"* here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB. In particular, the base station may also be gNB in a Non-Terrestrial Network (NTN) NR system.

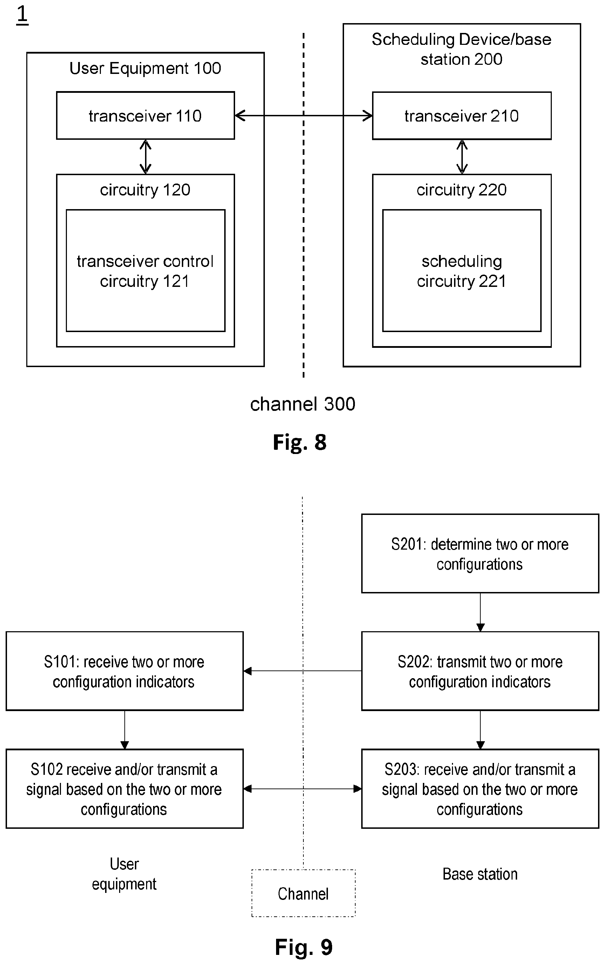

As already mentioned above, the present disclosure provides user equipments and a base stations. The present disclosure further provides corresponding methods and programs. An example of such communication system is illustrated in Fig. 8. The communication system 1 may be a wireless communication system in accordance with the technical specifications of 5G, in particular a NR communication system. However, the present disclosure is not limited to 3GPP NR and may also be applied to other wireless or cellular systems such as NTNs.

**Fig. 8** illustrates a general, simplified and exemplary block diagram of a user equipment 100 (also termed communication device) and a scheduling device 200 (here exemplarily assumed to be located in the base station, e.g. the LTE eNB (alternatively termed ng-eNB) or the gNB in 5G NR). However, in general, a scheduling device may also be a terminal in case of a sidelink connection between two terminals. Moreover, in particular with respect to the use cases of URLLC; eMBB, and mMTC, the user equipment 100 may also be a sensor device, a wearable device, or a connected vehicle, or a controller of an automated machine in an industrial factory. Further, a user equipment may be able to function as a relay between scheduling device 200 and another communication device (e.g. the disclosure is not limited to communication "terminals" or user "terminals"). As illustrated in **Fig. 8****,** the UE 100 and the scheduling device 200 (eNB/gNB) may communicate with each other over a (wireless) physical channel 300 respectively using their transceivers 110 (UE side) and 210 (scheduling device side). Together, the scheduling device 200 and the user equipment 100 form the communication system 1. The communication system 1 may further include other entities such as those shown in Fig. 1. Communication between the UE 100 and the scheduling device is typically standardized and may be defined by different layers, such as PHY, MAC, RRC etc. (see above background discussion).

As illustrated on the left side of **Fig. 8****,** a user equipment 100 may comprise a transceiver 110 and circuitry 120 (or processing circuitry), and a scheduling device 200 may comprise a transceiver 210 and a (processing) circuitry 330. The transceiver 110, 120 in turn may comprise and/or function as a receiver and a transmitter. In this disclosure, in other words, the term "transceiver" is used for hardware and software components that allow the user equipment 100, or, respectively scheduling device 200 to transmit and/or receive radio signals over a wireless channel. Accordingly, a transceiver corresponds to a receiver, a transmitter, or a combination of receiver and transmitter. Typically, a scheduling device and a user equipment are assumed to be capable of transmitting as well as receiving radio signals. However, particularly with respect to some applications of eMBB, mMTC and URLLC (smart home, smart city, industry automation etc.), cases are conceivable in which a device, such as a sensor, only receives signals. Moreover, the term "circuitry" includes processing circuitry formed by one or more processors or processing units, etc. The transmitter may be responsible for performing the process of transmitting and other processes related thereto. The receiver may be responsible for performing the process of receiving and other processes related thereto, such as monitoring a channel. A circuitry or processing circuitry may be one or more pieces of hardware such as one or more processors or any LSIs. Between the transceiver and the processing circuitry there may be an input/output point (or node) over which the processing circuitry, when in operation, can control the transceiver, i.e. control the receiver and/or the transmitter and exchange reception/transmission data. The transceiver, as the transmitter and receiver, may include the RF (radio frequency) front including one or more antennas, amplifiers, RF modulators/demodulators and the like. The processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc.

### Discontinuous reception - discontinuous transmission

In the following, multiple embodiments are described in detail making use of the term discontinuous reception (DRX). However, the present disclosure is not limited to reception processes performed by a UE and may equally relate to transmission processes. Accordingly, the term "DRX" should not be understood as relating to reception of signals by a UE only, but may also relate to transmission of signals by the UE. Accordingly, in particular in the framework of a cell specific DRX configuration, the concept may be referred to as discontinuous reception (DTX) also.

### Uplink and downlink signals

In the following description, the term signal is used for transmission and reception of data in downlink (DL) or uplink (UL).

In this respect, it should be noted that the description of receiving a DL signal includes at least, but not limited to, the reception of a physical downlink control channel, PDCCH, a channel status information-reference signal, CSI-RS, a synchronization signal block, SSB, a physical downlink shared channel, PDSCH, and/or a positioning reference signal, PRS, or the like

Further, it should be noted that the description of transmitting an UL signal includes at least, but not limited to, the transmission of a physical uplink control channel, PUCCH, a physical uplink shared channel, PUSCH, a physical random access channel, PRACH, and/or a sounding reference signal, SRS, or the like.

### First embodiment

According to an exemplary first embodiment, a user equipment 100 as e.g. illustrated in **Fig.** 8 is provided. The user equipment 100 comprises a transceiver 110 and circuitry 120. The circuity 110, in operation, receives two or more configuration indicators, each indicating a configuration of a periodic timing pattern including ON periods. The circuitry 120, in operation, causes the transceiver 110 to receive and/or to transmit a signal based on the two or more configuration indicators.

It is to be noted that a timing pattern according to the configurations may include OFF periods in addition to the ON periods. However, because the ON period may be extended, e.g. depending on the traffic (see section *"Discontinuous reception* - *DRX'),* the timing pattern does not necessarily include OFF periods in every case.

The circuitry 120 may implement more functionality than the above-mentioned obtaining and determining, as it may, for instance, further control the transceiver 110 to receive the control signalling and/or to receive or transmit data. Thus, the circuitry 120 is exemplarily considered to include transceiver control circuitry 121, which is configured to perform said control. The configuration may be provided by hardware adaption and/or by software.

In correspondence with the above described UE 100, a method to be performed by a UE 100 (or communication device) is provided. As shown in **Fig. 9****,** the method comprises the steps of (i) receiving S101 two or more configuration indicators, each indicating a configuration of a periodic timing pattern including ON periods, and (ii) receiving and/or to transmitting a signal based on the two or more configuration indicators.

As also shown on the right side of **Fig. 8** (right-hand side), according to another exemplary embodiment, a base station 200 is provided. The base station 200 comprises a transceiver 210 and a circuitry 220. The circuitry 220, in operation, determines two or more configurations of a periodic timing pattern including ON periods. The transceiver, in operation, transmits two or more configuration indicators indicating the two or more configurations to a user equipment, UE, and receives and/or transmits a signal based on the two or more configurations, from the UE and/or to the UE.

The circuitry 220 may implement more functionality than the above-mentioned determining, as it may, for instance, further control the transceiver 210 to transmit the control signalling and/or to receive or transmit data. Thus, the circuitry 220 is exemplarily considered to include scheduling circuitry 221, which is configured to perform said determining. The configuration may be provided by hardware adaption and/or by software.

Furthermore, in correspondence with the above described scheduling device, a method to be performed by a base station is provided. As shown in **Fig. 9****,** the method comprises a steps of (i) determining S201 two or more configurations of a periodic timing pattern including ON periods, (ii) transmitting S202 two or more configuration indicators indicating the two or more configurations to a user equipment, UE 100, and (iii) receiving and/or transmitting a signal based on the two or more configurations, from the UE 100 and/or to the UE 100.

### Second embodiment

According to a second embodiment, just as in the first embodiment, the UE 100 receives two or more configuration indicators, each indicating a configuration of a periodic timing pattern including ON periods. The UE 100 receives and/or transmits a signal based on the two or more configuration indicators.

In the second embodiment, a cell specific DRX configuration and a UE specific DRX configuration are configured. A DCI may or may not be used for indicating a DRX configuration to follow for transmission of a signal.

In other words, the UE 100 receives two or more configuration indicator indicating two or more configurations. The two or more configurations include a first configuration specified for a plurality of UEs served by a cell and a second configuration specified for a subset of the plurality of UEs served by the cell, wherein the subset includes the UE 100.

For example, the first configuration may be a DRX configuration indicated in a system information block, SIB, received by the UE 100. The second configuration may be a DRX configuration indicates by dedicated RRC signaling, for example.

Each of the configurations may correspond to a periodic timing pattern including ON periods. The plurality of UEs may include the UE 100 and one or more other UEs served by the cell. That is, the UE 100 may configured with at least two DRX configurations, wherein one of said configurations (the first configuration), namely the cell-specific configuration is a configuration for all UEs served by the cell, including the UE 100 according to the embodiment. The second configuration is a DRX configuration configured for a subset of all UEs served by the cell. In other words, a group of UEs is configured with the second DRX configuration. It goes without saying that other groups of UEs may be configured with another DRX configuration (a third DRX configuration).

The DRX configurations may differ in the length of respective ON periods and/or their periodicity. The term periodicity relates to the repetition time period after which the pattern of ON periods and OFF periods is repeated according to respective DRX configuration.

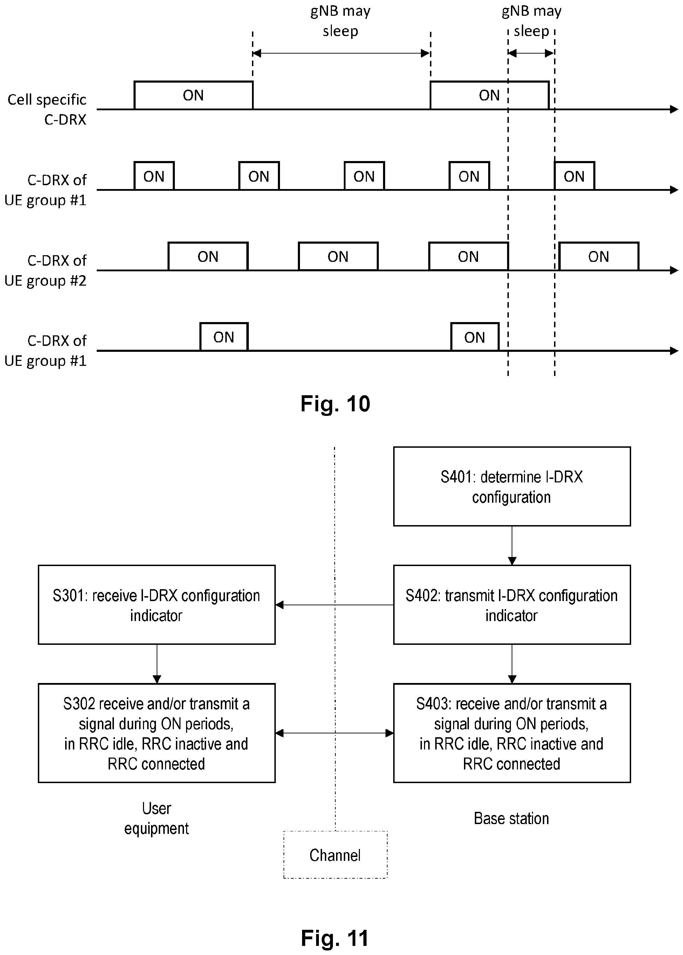

**Fig. 11** illustrates a situation, wherein a cell specific C-DRX configuration is configured for all UEs of a cell and three C-DRX configurations are configured for respective groups of UEs #1 to #3 (i.e. three subsets of all UEs served by the cell. One of said groups, e.g. UE group #1 may include the UE 100.

The UE 100 may receive and/or transmit a signal within an overlap period of the ON periods according to the first configuration and the second configuration.

In other words, the UE 100 receives and/or transmits a signal only during ON periods of both of the first and the second DRX configuration. For example, when the UE 100 is within UE group #1, it may receive and/or transmit the signal only at a timing which is included in the ON periods of the cell-specific C-DRX configuration and in the ON periods of the C-DRX configuration of UE group #1, but not at a timing included in one of the ON periods of the C-DRX configurations (the cell-specific C-DRX configuration and the C-DRX configuration of UE group #1) only.

UEs included in UE groups #2 and #3 may exhibit an according behavior. Thus, the base station 200 may expect uplink transmissions and/or transmit downlink (DL) transmissions only during the portion of ON-periods of the cell-specific C-DRX configuration, which overlaps with ON-periods of the C-DRX configurations of the UE groups #1 to #3. Hence, the base station 200 may sleep outside the ON periods of the cell-specific C-DRX configuration. Further, the base station 200 may sleep during portion of said ON periods, which do not overlap with any one of the ON periods of the C-DRX configurations of UE groups #1 to #3.

As a result, the time the base station 200 may sleep may be increased, leading to a reduced consumption of energy. Further, no additional signaling, e.g. in downlink control information, DCI, is required.

However, in a variation of the second embodiment, the base station 200 may indicate the UE 100 which of the first and the second configuration the UE 100 is to follow, e.g. by a DCI.

In other words, the UE 100 may receive downlink control information, DCI, indicating one of the first configuration and the second configuration. Further, the UE 100 may receive and/or transmit the signal within an ON period according to the configuration indicated by the DCI.

It is to be noted that the indication by DCI may be implicit or explicit. For example, a new parameter may be defined for indicating a DRX configuration to be followed by the UE 100 receiving the DCI. In a case where no such indication by DCI is received by the UE 100, a default DRX configuration may be defined. For instance, in the absence of an indication which DRX configuration the UE 100 is to follow, the UE 100 may follow the first configuration. Alternatively, in the absence of the indication, the UE 100 may follow the second DRX configuration. Alternatively, in the absence of the indication, the UE 100 may follow the first and the second DRX configuration in the sense that the UE receives and/or transmits a signal during an overlap period of the ON periods of the first configuration and the second configuration. Alternatively, in the absence of the indication, the UE 100 may follow both configurations in the sense that the UE 100 receives and/or transmits a signal during an ON period of any one of the first and the second configuration.

Allowing for an indicating which DRX configuration the UE 100 is to follow increases the base station's 200 flexibility and may increase the capabilities of balancing network energy saving gain, UE power saving gain and service quality. That is, using a cell specific DRX configuration can largely reduce the signaling overhead. Using a DCI to indicate which DRX configuration a UE is to follow may increase the control flexibility.

### Third embodiment

According to a third embodiment, just as in the first embodiment, the UE 100 receives two or more configuration indicators, each indicating a configuration of a periodic timing pattern including ON periods. The UE 100 receives and/or transmits a signal based on the two or more configuration indicators.

In the third embodiment, the UE 100 is configured with multiple cell specific DRX configurations. A DCI may or may not be used for indicating a DRX configuration to follow for transmission/reception of a signal. For example, the UE 100 may receive more than one DRX configuration indicator within a SIB.

In other words, two or more configurations, indicated by the two or more configuration indicators, are configurations specified for a plurality of UEs served by a cell, including the UE 100.

In a variation of the third embodiment, the UE 100 determines to receive and/or to transmit a signal based on a DRX configuration that is RRC configured. That is, the UE 100 may receive a radio-resource control, RRC message indicating one of the two or more configurations and transmit the signal during an ON period according to the configuration indicated by the RRC message.

Table 1 illustrates a potential mapping of DRX configuration indicator values and characteristics of the applied DRX configuration, configured by RRC. In the example, the DRX configurations indicated by values 00, 01 and 10 differ in their periodicity. The indicator value 11 indicates that no DRX configuration is to be applied. Although in the example the DRX configurations differ from one another in their periodicity, they may - additionally or alternatively - differ from one another in the duration of respective ON periods and/or their relative temporal relationship/temporal shift with respect to each other.

**Table 1**

| DRX configured by RRC | 00 | 01 | 10 | 11 |
|---|---|---|---|---|
| Applied DRX | DRX periodicity 200 ms | DRX periodicity 100 ms | DRX periodicity 20 ms | No DRX is applied |

In another variation of the third embodiment, the UE 100 determines to receive and/or to transmit a signal based on a DRX configuration that is indicated by a DCI. In other words, the UE 100 may receive downlink control information, DCI, indicating one of the two or more configurations. The UE 100 may receive and/or transmit the signal during an ON period according to the configuration indicated by the DCI.

Table 2 illustrates a potential mapping of DRX configuration indicator values and characteristics of the applied DRX configuration, in a DCI. Just as in the first variation, in the example, the DRX configurations indicated by values 00, 01 and 10 differ in their periodicity. The indicator value 11 indicates that no DRX configuration is to be applied. Although in the example the DRX configurations differ from one another in their periodicity, they may - additionally or alternatively - differ from one another in the duration of respective ON periods and/or their relative temporal relationship/temporal shift with respect to each other.

**Table 2**

| DRX indication in DCI | 00 | 01 | 10 | 11 |
|---|---|---|---|---|
| Applied DRX | DRX periodicity 200 ms | DRX periodicity 100 ms | DRX periodicity 20 ms | No DRX is applied |

As a more general scope of this embodiment, the bit width of the indication in the DCI can be more or less than 2 and the number of indicators can be more or less than 4, which are just exemplary for easier explanation. That is, the DRX indication in the DCI may indicate one DRX configuration from among a plurality of DRX configurations using an indicator having an appropriate bit width.

In the above-described variations, the DRX configuration to be followed by the UE 100 is configured by RRC message or indicated in a DCI. This approach may allow for increased flexibility on balancing network energy saving gain, system throughput and serve latency. Using a DCI to indicate a DRX configuration to be followed by the UE 100 allows for faster adaption of said aspects.

In the described examples, a DRX configured by RRX or a DRX indicated by DCI relates to one DRX to be followed or may indicate that no DRX is to be followed.

In another, i.e. a third, variation, The UE 100 may receive and/or transmit a signal based on the DRX configurations, and a DCI, which indicates the UE 100 which DRX configuration is to follow. However, further, the DCI may indicate a combination of DRX configurations.

For example, as illustrated in Table 3, just as in the second variation, the indicator values 00 and 01 indicate one DRX configuration, namely DRX configuration "DRX#1" with a periodicity of 200 ms and DRX configuration "DRX#2" with a periodicity of 100 ms. However, the indicator values 10 and 11 indicate a combination of DRX configurations DRX#1 and DRX#2. Specifically, the indicator value of 10 indicates that the UE 100 may receive and/or transmit the signal at a timing, which is within an ON duration of at least one of the configurations DRX#1 and DRX#2 (DRX#1 OR DRX#2). On the other hand, the indicator value 11 indicates that the UE 100 may receive and/or transmit the signal at a timing, which is both within the ON duration of DRX#1 and the ON duration of DRX#2, i.e. within an overlap period of respective ON durations.

**Table 3**

| DRX indication in DCI | 00 | 01 | 10 | 11 |
|---|---|---|---|---|
| Applied DRX | DRX#1 periodicity 200 ms | DRX#2 periodicity 100 ms | ON duration of (DRX#1 OR DRX#2) | ON duration of (DRX#1 AND DRX#2) |

In other words, the UE 100 may receive downlink control information, DCI, which indicates (i) one of the configurations, according to which the signal is to be transmitted and/or received, (ii) at least two configurations, wherein the signal is to be transmitted and/or received within an ON period according to any one of the at least two configurations, or (iii) at least two configurations, wherein the signal is to be transmitted and/or received within an overlap period of the ON periods according to the at least two configurations.

According to the third variation, multiple DRX patterns may be created by combining DRX configurations configured, e.g. in a SIB with little signaling overhead.

As a more general scope of this embodiment, the bit width of the indication in the DCI can be more or less than 2 and the number of indicators can be more or less than 4, which are just exemplary for easier explanation. That is, the DRX indication in the DCI may indicate one DRX configuration from among a plurality of DRX configurations using an indicator having an appropriate bit width.

### Fourth embodiment

According to a fourth embodiment, just as in the first embodiment, the UE 100 receives two or more configuration indicators, each indicating a configuration of a periodic timing pattern including ON periods. The UE 100 receives and/or transmits a signal based on the two or more configuration indicators.

The UE 100 is configured with multiple cell specific DRX configurations. A DCI may or may not be used for indicating a DRX configuration to follow for transmission/reception of a signal. For example, the UE 100 may receive more than one DRX configuration indicator within a SIB.

In other words, the two or more configurations, indicated by the two or more configuration indicators, are configurations specified for a subset of a plurality of UEs served by a cell, wherein the subset includes the UE

In the fourth embodiment, a UE received multiple UE-specific DRX configurations via RRC signaling. Further, a DCI is used for indicating a DRX configuration to follow for transmission/reception of a signal. For example, for this purpose, the DCI formats 2_6, 0_1, or 1_1 may be extended.

In a first variation, the indication of the DRX configuration may be implicit. For example, the DRX configuration to be used may be interpreted from a field indicating an SCell dormancy in DCI. In other words, the DRX configuration may be linked to an SCell dormancy.

In other words, each of the two or more configurations is associated with a secondary cell, SCell, dormancy configuration. The DCI received by the UE 100 indicates one of the two or more configurations by an SCell dormancy indicator. The UE 100 receives and transmits the signal during an ON period according to the configuration indicated by the DCI, i.e. the SCell dormancy indicator.

It is to be noted that the SCell dormancy configuration may relate to one or more SCells. That is, the SCell dormancy configuration may relate to one or more dormant SCells and/or one or more non-dormant SCells.

Table 4 illustrates a possible mapping between an SCell dormancy indication in DCI and a respective DRX configuration. Specifically, each of the SCell dormancy indicator values is associated with a DRX configuration. In the example, the DRX configurations differ from one another in their periodicity. However, they may additionally or alternatively, differ from one another in the duration of respective ON durations and/or their temporal relationship/shift with respect to each other.

**Table 4**

| SCell dormancy indication in DCI | 00001 | 00010 | 00100 | 01000 |
|---|---|---|---|---|
| RRC configured DRX | DRX periodicity 200 ms | DRX periodicity 100 ms | DRX periodicity 20 ms | DRX periodicity 10 ms |

Although in the present embodiment, four DRX configurations are associated with four SCell dormancy indicators in DCI, the present disclosure is not limited thereto. There may be more or less than 4 DRX configurations associated with a corresponding number of SCEII dormancy indications. Further, an SCell dormancy indication is not necessarily linked to a DRX configuration. That is, some SCell dormancy indications may be associated with respective DRX configurations, whereas other SCell dormancy indications may not. When a UE 100 receives a DCI including an SCell dormancy indication not associated with a DRX configuration, it may follow a predetermined DRX configuration or may not apply any DRX configuration.

In a preferred modification thereof, the periodicity of the indicated configuration is longer and/or respective ON durations are shorter the more non-dormant SCells are indicated by the SCell dormancy indicator.

That is, a plurality of DX configurations may be associated with SCell dormancy indications in DCI such that a longer DRX periodicity is associated with more non-dormant SCells. In other words, DRX configurations of shorter periodicity may be associated with an SCell dormancy indicator indicating more dormant SCells. In addition or alternatively, a shorter ON duration, e.g. implemented by an OnDuration timer having a shorter duration may be associated with more non-dormant SCells. In other words, a DRX configuration having longer ON durations (OnDuration timer with a longer runtime) may be associated with more dormant SCells.

With this approach, energy saving capabilities may be enhanced, because a higher amount of frequency resources leads to a lower chance in time domain to schedule resources, and *vice versa.*

In a second variation, the indication of the DRX configuration is implicit. Specifically, the DRX configuration to be used may be interpreted from a field indicating Search Space Set Group (SSSG) switching. In other words, the DRX configuration may be linked to SSSG switching.

In other words, each of the two or more configurations is associated with SSSG switching. The DCI received by the UE 100 indicates one of the two or more configurations by an SSSG switching indicator. The UE 100 receives and transmits the signal during an ON period according to the configuration indicated by the DCI, i.e. the SSSG switching indicator.

Table 5 illustrates a possible mapping between SSSG switching bits in DCI and a respective DRX configuration. Specifically, each of the SSSG switching bit values is associated with a DRX configuration. In the example, the DRX configurations differ from one another in their periodicity. However, they may additionally or alternatively, differ from one another in the duration of respective ON durations and/or their temporal relationship/shift with respect to each other.

**Table 5**

| SSSG switching bits in DCI | 00 | 01 | 10 | 11 |
|---|---|---|---|---|
| RRC configured DRX | DRX periodicity 200 ms | DRX periodicity 100 ms | DRX periodicity 20 ms | DRX periodicity 10 ms |

The present disclosure is not limited to four SSSG switching bits indications in DCI being associated with a DRX configuration. For example, there may be less or more than four SSSG switching bits indications associated with less or more than four DRX configurations. Further, SSSG switching bits may not necessarily linked to a DRX configuration. That is, some SSSG switching bits may be associated with respective DRX configurations, whereas other SSSG switching bits may not. When a UE 100 receives a DCI including SSSG switching bits not associated with a DRX configuration, it may follow a predetermined DRX configuration or may not apply any DRX configuration.

In a preferred modification thereof, the periodicity of the indicated configuration is longer and/or respective ON durations are shorter the higher a temporal density of PDCCH, to be monitored according to the SSSG switching indicator is.

That is, a plurality of DX configurations may be associated with SSSG switching bits in DCI such that a longer DRX periodicity is associated with a higher temporal density of PDCCHs to be monitored. In other words, DRX configurations of shorter periodicity may be associated with SSSG switching bits in DCI corresponding to a lower temporal density of PDCCHs to be monitored. In addition or alternatively, a shorter ON duration, e.g. implemented by an OnDuration timer having a shorter duration may be associated with a higher temporal density of PDCCHs to be monitored. In other words, a DRX configuration having longer ON durations (OnDuration timer with a longer runtime) may be associated with a lower temporal density of PDCCHs to be monitored.

The temporal density of PDCCHs may be the number of PDCCH resources and/or monitoring occasions to be monitored divided by a predetermined amount of time.

With this approach, energy saving capabilities may be enhanced, because a longer DRX periodicity and/or a shorter DRX ON duration is associated with denser PDCCH monitoring. This may allow for balancing the base station energy saving due to longer sleep duration and the system performance in active/non-sleep durations.

In a third variation, the indication of the DRX configuration is implicit. Specifically, the DRX configuration to be used may be interpreted from a field indicating whether PDCCH skipping is to be performed or not. In other words, the DRX configuration may be linked to PDCCH skipping/PDCCH monitoring.

In other words, each of the two or more configurations is associated with a PDCCH skipping configuration. The DCI received by the UE 100 indicates one of the two or more configurations by a PDCCH skipping indicator. The UE 100 receives and transmits the signal during an ON period according to the configuration indicated by the DCI, i.e. the PDCCH skipping indicator.

Table 6 illustrates a possible mapping between values of a PDCCH skipping indicator in DCI and a respective DRX configuration. Specifically, each of the PDCCH skipping indicator values is associated with a DRX configuration. In the example, the DRX configurations differ from one another in their periodicity. Specifically, in a case where PDCCH skipping is not indicated (PDCCH skipping indicator value is 0), a DRX configuration having a periodicity of 200 ms is followed. On the other hand, in a case where the PDCCH skipping indicator indicates PDCCH skipping (PDCCH skipping indicator value is 1), a DRX configuration having a periodicity of 100 ms is to be followed by the UE 100. However, the DRX configurations may, additionally or alternatively, differ from one another in the duration of respective ON durations and/or their temporal relationship/shift with respect to each other.

**Table 6**

| PDCCH skipping indication in DCI | 0 | 1 |
|---|---|---|
| RRC configured DRX | DRX periodicity 200 ms | DRX periodicity 100 ms |

In a preferred modification thereof, the periodicity of the indicated configuration is longer or shorter the longer a PDCCH skipping duration is indicated by the PDCCH skipping indicator.

That is, a longer DRX periodicity may correspond to a longer PDCCH skipping duration. Alternatively, a shorter DRX periodicity may correspond to a shorter PDCCH skipping duration.

This aspect may allow for more controlling tradeoff of the base station 200 energy saving gain and scheduling flexibility.

Summarizing, according to the fourth embodiment, the UE 100 receives more than one UE specific (or UE group specific) DRX configurations in RRC signaling. The UE 100 determines to receive and/or transmit a single based on the DRX configurations and a DCI, which indicates which DRX configuration the UE 100 is to follow.

Accordingly, the flexibility of controlling DRX configurations is increased and, in particular, the reuse of current DCI for UE power saving may minimize specification impact and reduce control signaling overhead.

Further, according to the preferred modifications of the variations, the DRX configuration and/or respective ON durations are associated with an SCell dormancy configuration, SSSG switching, or a PDCCH skipping configuration, wherein the periodicity and/or the duration of respective ON durations are set so as to depend on the specific configurations (the SCell dormancy configuration, SSSG switching, or PDCCH skipping). This concept may be similarly applied to embodiments 1 to 3.

### Fifth embodiment

According to a fifth exemplary embodiment, a user equipment 100 as e.g. illustrated in Fig. 8 is provided. The user equipment 100 comprises a transceiver 110 and circuitry 120. The transceiver 110, in operation, receives an idle mode discontinuous reception, I-DRX, configuration indicator indicating an I-DRX configuration. The circuitry 120, in operation, causes the transceiver 110 to receive and/or transmit a signal during ON periods, in radio resource control, RRC, idle mode, in RRC inactive mode and in RRC connected mode, according to the I-DRX configuration.

The circuitry 120 may implement more functionality than the above-mentioned obtaining and determining, as it may, for instance, further control the transceiver 110 to receive the control signalling and/or to receive or transmit data. Thus, the circuitry 120 is exemplarily considered to include transceiver control circuitry 121, which is configured to perform said control. The configuration may be provided by hardware adaption and/or by software.

In correspondence with the above described UE 100, a method to be performed by a UE 100 (or communication device) is provided. As shown in Fig. 11, the method comprises the steps of (i) receiving S301 an idle mode discontinuous reception, I-DRX, configuration indicator indicating an I-DRX configuration, and (ii) receiving and/or transmitting a signal during ON periods, in radio resource control, RRC, idle mode, in RRC inactive mode and in RRC connected mode, according to the I-DRX configuration.

As also shown on the right side of **Fig. 8** (right-hand side), according to another exemplary embodiment, a base station 200 is provided. The base station 200 comprises a transceiver 210 and a circuitry 220. The circuitry 220, in operation, determines an idle mode discontinuous reception, I-DRX, configuration. The transceiver 220, in operation, transmits an I-DRX configuration indicator indicating the I-DRX configuration to a user equipment, UE 100, and receives and/or transmits a signal during ON periods from the UE 100 and/or to the UE 100, in radio resource control, RRC, idle mode, in RRC inactive mode, and in RRC connected mode, according to the I-DRX configuration.

The circuitry 220 may implement more functionality than the above-mentioned determining, as it may, for instance, further control the transceiver 210 to transmit the control signaling and/or to receive or transmit data. Thus, the circuitry 220 is exemplarily considered to include scheduling circuitry 221, which is configured to perform said determining. The configuration may be provided by hardware adaption and/or by software.

Furthermore, in correspondence with the above described scheduling device, a method to be performed by a base station is provided. As shown in **Fig. 11****,** the method comprises a steps of (i) determining S401 an idle mode discontinuous reception, I-DRX, configuration, (ii) transmitting S402 an I-DRX configuration indicator indicating the I-DRX configuration to a user equipment, UE 100, and (iii) receiving and/or transmitting S403 a signal during ON periods from the UE 100 and/or to the UE 100, in radio resource control, RRC, idle mode, in RRC inactive mode, and in RRC connected mode, according to the I-DRX configuration.

It is further noted that any of the steps/operations described may be performed or controlled by the circuitry 110 (on the UE side) and/or the circuitry 210 (on the scheduling device). In the further description, the details and embodiments apply to each of the communication device (the UE 100), the base station 200 (scheduling device or scheduling nodes) and the methods unless explicit statement or context indicates otherwise.

Moreover it is noted that, since the present disclosure relates to resource usage and scheduling, both entities, a user equipment (typically communication device/transceiver device) and scheduling device (typically network node) may take part.

According to the embodiment, a current cell specific I-DRX configuration may be applied to UE in RRC CONNECTED and RRC IDLE/INACTIVE states. Further DCI signaling may or may not be used, e.g. for indicating whether the I-DRX configuration should be followed by a UE.

In otherwords, the UE 100 may receive an idle mode discontinuous reception, I-DRX configuration indicator indicating an I-DRX configuration. Further, the UE may receive and/or transmit a signal during ON periods, in radio resource control, RRC, idle mode, in RRC inactive mode and in RRC connected mode, according to the I-DRX configuration.

That is, just one set of DRX configuration may be used to control all the UEs served by a cell. For example, the UE 100 may receive the I-DRX configuration by a dedicated indicator in SIBx, e.g. SIB1. Using one I-DRX configuration may be beneficial in a case where UE service latency is not highly demanding and may allow for maximizing network energy saving gain with a low control overheat.

In a first variation of the fifth embodiment, an additional active time (an OnDuration timer, for example) may be defined as a new parameter (with respect to existing I-DRX configuration) and configured in a certain SIBx, e.g., SIB1, besides the current parameters, PF/PO, indicating a paging monitoring configuration. During the runtime of the OnDuration timer (the additional active time), a UE 100 in RRC connected mode may be allowed to skip receiving a DL signal (e.g. performing PDCCH monitoring) and/or to skip transmit an UL signal in the non-active duration.

In other words, the I-DRX configuration indicator may include a timing indicator indicating an active time. The UE 100 may determine ON periods according to the I-DRX configuration and the indicated active time and skip receiving and/or transmitting a signal during periods outside the ON periods.

That is, according to the variation of the fifth embodiment, an I-DRX configuration is reused for both CONNECTED and IDLE/INACTIVE UEs, wherein, when in RRC CONNECTED mode, the UE 100 may be configured with an I-DRX configuration and an additional active time. When outside an ON duration according to the I-DRX configuration and the active time, the UE 100 may not receive and/or transmit a signal.

According to this aspect, the network energy saving gain is optimized, because the base station 200 may not expect and transmission or reception outside the active time according to the I-DRX configuration and respective OnDuration timer and, hence, may sleep. Further, there is no additional L1 control overhead necessary.

According to a second configuration, a DCI is used to indicate an RRC CONNECTED UE whether reception/transmission of a signal should be skipped or continued before each I-DRX cycle.

In other words, the UE 100 may receive downlink control information, DCI, indicating whether, when in RRC connected mode, the UE should skip or continue receiving and/or transmitting the signal before each I-DRX cycle according to the I-DRX configuration.

For example, the UE 100 may receive a DCI including an indicator indicating that the UE 100 should, when in RRC CONNNECTED mode, skip receiving and/or transmitting the signal before I-DRX cycles. Accordingly, when in RRC CONNECTED mode, the UE 100 does not receive and/or transmit a signal before an I-DRX cycle. Further, when the UE 100 receives a DCI including an indicator indicating that the UE 100 should continue, when in RRC CONNECTED mode, receiving and/or transmitting the signal.

That is, whether receiving/transmitting the signal is skipped or not may be signaled by a DCI. According to this aspect, with little system overhead, a tradeoff between network energy saving and system performance may be achieved, leading to a higher flexibility.

### Methods according to the first through fifth embodiment

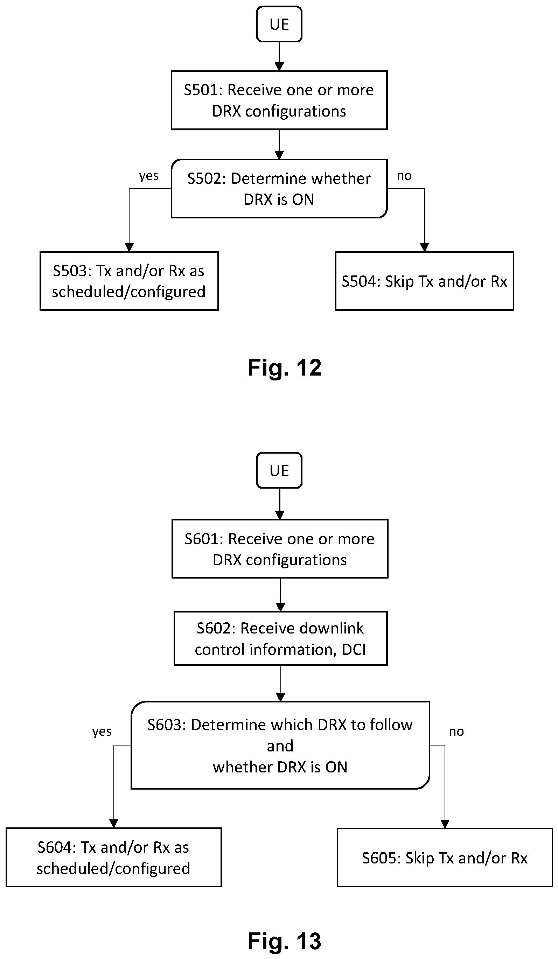

In the above-described embodiments, a DCI may or may not be used to indicate to the UE 100 which DRX configuration or which combination of DRX configurations should be followed. **Fig. 12** and **Fig. 13** illustrate methods according to the first through fifth embodiment, wherein a DCI is either used (Fig. 13) or not (Fig. 12).

**Fig. 12** illustrates a method according the embodiments, wherein a DCI is not used for indicating a DRX configuration to be followed.

In step S501, the UE 100 receives one or more configuration indicators, each indicating a configuration of a periodic timing pattern including ON periods. For example, the UE 100 receives one or more DRX configurations. In the first to fourth embodiment, the UE 100 receives two or more configuration indicators, whereas in the fifth embodiment, the UE 100 receives on configuration indicator.

Further, in step S502, the UE 100 determines whether an ON duration of the one or more DRX configurations is running. In other words, the UE 100 determines whether the DRXconfiguration(s) is/are ON. This may be performed as described with respect to the embodiments above. When the DRX configuration(s) is/are ON (yes in step S502), the UE 100 transmits (Tx) and/or receives (Rx) a signal as scheduled or configured in step S503. On the other hand, when the DRX configuration(s) is/are not ON (no in step S502), the UE 100 skips transmission (Tx) and/or reception (Rx) of the signal as scheduled or configured in step S504. In other words, the UE 100 does not transmit the signal when outside the ON duration.

**Fig. 13** illustrates a method according the embodiments, wherein a DCI is used for indicating a DRX configuration to be followed.

Step S601 corresponds to step S501 of Fig. 12, wherein the UE 100 receives one or more configuration indicators indicating one or more configurations of a periodic timing pattern including ON periods.

In step S602, the UE 100 receives downlink control information, DCI. The DCI may indicate a DRX configuration or a combination of DRC configurations to be followed (as in the first to fourth embodiment) or whether to skip or continue reception and/or transmission of a signal before an I-DRX cycle (as in the fifth embodiment).

In step S603, the UE 100 determines which DRX configuration or which DRX configuration combination it is to follow, based on the indication of the DCI. Further, it is determined whether said determined DRX configuration/DRX configuration combination is ON. Subsequently, when the determined DRX configuration is ON (yes in step S603), the UE 100 transmits (Tx) and/or receives (Rx) a signal as scheduled or configured in step S604. On the other hand, when the DRX configuration(s) is/are not ON (no in step S602), the UE 100 skips transmission (Tx) and/or reception (Rx) of the signal as scheduled or configured in step S605. In other words, the UE 100 does not transmit the signal when outside the ON duration.

### Sixth embodiment

According to a sixth embodiment, just as in the third and the fourth embodiment, the UE 100 receives two or more configuration indicators, each indicating a configuration of a periodic timing pattern including ON periods. The UE 100 receives and/or transmits a signal based on the two or more configuration indicators, wherein two or more configurations, indicated by the two or more configuration indicators, are configurations specified for a plurality of UEs served by a cell, including the UE 100. That is, the sixth embodiment may be seen as a modification and/or extension of the third and fourth embodiment.

In the sixth embodiment, a DRX configuration includes or is associated with a set of SSB beam indexes/pattern, and/or TCI states. When a DRX configuration is indicated and applied by UE, the associated SSB beam indexes and/or TCI states are applied.

In other words, for example, the two or more configuration indicators may further indicate two or more target SSB patterns, comprising one or more SSBs out of a set of candidate SSBs, to be used by the UE 100. The UE 100 performs SSB related functions based on the two or more configuration indicators.

For example, the SSB-related functions are performed based on the target SSB pattern indicated by the configuration indicator, which indicates the configuration followed by the UE 100 for receiving and/or transmitting the signal.

Alternatively, the each of the two or more configurations may be associated with a target synchronization signal block, SSB, pattern. The UE 100 performs SSB-related functions based on the target SSB pattern associated with the configuration followed by the UE for receiving and/or transmitting the signal.

For example, each of the configured DRX configurations may be associated with an SSB pattern. When the UE 100 receives an indicator indicating a DRX configuration, which the UE 100 is to follow (as described in the third and fourth embodiment, for example, the UE 100 may determine the associated SSB pattern and perform SSB-related function according to the determined SSB pattern.

Alternatively, for example, the configuration indicator may further indicate an SSB pattern to be applied by the UE 100. That is, the configuration indicator may not only indicate DRX configurations, but also an SSB pattern to be applied.

Further, for example, the configuration indicators may further indicate transmission configuration indication, TCI, states, and the UE may receive and/or transmit the signal based on the TCI states.

That is, for example, the signal may be received and/or transmitted signal based on the TCI state indicated by the configuration indicator indicting the configuration followed by the UE for receiving and/or transmitting the signal.

Alternatively, each of the two or more configurations is associated with a transmission configuration indication, TCI, state; and the UE 100 receives and/or transmits the signal based on the TCI state associated with the configuration followed by the UE for receiving and/or transmitting the signal

That is, according to the embodiment, SSB patterns and/or TCI states are associated with respective DRX configurations. The UE 100 applies the SSB pattern and/or the TRX states associated with the DRX configuration followed. The association relation between DRX configurations and SSB patterns/TCI states may be predetermined or signaled. That is, the UE 100 may receive configuration indicators and determine corresponding SSB patterns and/or TCI states, or may receive a configuration indicator, which indicates, besides the DRX configuration, one or more respective SSB patterns/TCI states. The UE 100 may then apply the SSB pattern/TCI states indicated by the configuration indicator for the DRX configuration applied.

### Hardware and Software Implementation of the present disclosure

The present disclosure can be realized by software, hardware, or software in cooperation with hardware. Each functional block used in the description of each embodiment described above can be partly or entirely realized by an LSI such as an integrated circuit, and each process described in each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g, cellular (cell) phone, smart phone), a tablet, a personal computer (PC) (e.g, laptop, desktop, netbook), a camera (e.g, digital still/video camera), a digital player (digital audio/video player), a wearable device (e.g, wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g, an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

Further, the various embodiments may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc. It should be further noted that the individual features of the different embodiments may individually or in arbitrary combination be subject matter to another embodiment.

It would be appreciated by a person skilled in the art that numerous variations and/or modifications may be made to the present disclosure as shown in the specific embodiments. The present embodiments are, therefore, to be considered in all respects to be illustrative and not restrictive

### Further aspects

According to a first aspect, provided is a user equipment, UE, comprising a transceiver which, in operation, receives two or more configuration indicators, each indicating a configuration of a periodic timing pattern including ON periods. The UE further comprises circuitry which, in operation causes the transceiver to receive and/or transmit a signal based on the two or more configuration indicators.

According to a second aspect, provided is a UE according to the first aspect, wherein the two or more configurations, indicated by the two or more configuration indicators, include a first configuration specified for a plurality of UEs served by a cell and a second configuration specified for a subset of the UEs served by the cell, wherein the subset includes the UE.

According to a third aspect, provided is a UE according to the second aspect, wherein the circuitry, in operation, causes the transceiver to receive and/or transmit the signal within an overlap period of the ON periods according to the first configuration and the second configuration.

According to a fourth aspect, provided is a UE according to the second aspect, wherein the transceiver, in operation, receives downlink control information, DCI, indicating one of the first configuration and the second configuration. The circuitry, in operation, causes the transceiver to receive and/or transmit the signal within an ON period according to the configuration indicated by the DCI.

According to a fifth aspect, provided is a UE according to the first aspect, wherein two or more configurations, indicated by the two or more configuration indicators, are configurations specified for a plurality of UEs served by a cell, including the UE.

According to a sixth aspect, provided is a UE according to the fifth aspect, wherein the transceiver, in operation, receives a radio resource control, RRC, message or downlink control information, DCI, wherein the RRC message or the DCI indicates one of the two or more configurations. The circuitry, in operation, causes the transceiver to receive and/or transmit the signal during an ON period according to the configuration indicated by the RRC message or by the DCI.

According to a seventh aspect, provided is a UE according to the fifth aspect, wherein the transceiver, in operation, receives downlink control information, DCI. The circuitry, in operation, causes the transceiver to receive and/or transmit the signal according to the DCI. The DCI indicates (i) one of the configurations, according to which the signal is to be transmitted and/or received, (ii) at least two configurations, wherein the signal is to be transmitted and/or received within an ON period according to any one of the at least two configurations, or (iii) at least two configurations, wherein the signal is to be transmitted and/or received within an overlap period of the ON periods according to the at least two configurations.

According to an eighth aspect, provided is a UE according to the first aspect, wherein the two or more configurations, indicated by the two or more configuration indicators, are configurations specified for a subset of a plurality of UEs served by a cell, wherein the subset includes the UE. Each of the two or more configurations is associated with a secondary cell, SCell, dormancy configuration, a search space set group, SSSG, or a physical downlink control channel, PDCCH, skipping configuration. The transceiver, in operation, receives downlink control information, DCI, indicating one of the two or more configurations by an SCell dormancy indicator, an SSSG switching indicator, or a PDCCH skipping indicator. The circuitry, in operation, causes the transceiver to receive and/or transmit the signal during an ON period according to the configuration indicated by the DCI.

According to a ninth aspect, provided is a UE according to the eighth aspect, wherein (i) the periodicity of the indicated configuration is longer and/or respective ON durations are shorter the more non-dormant SCells are indicated by the SCell dormancy indicator, (ii) the periodicity of the indicated configuration is longer and/or respective ON durations are shorter the higher a temporal density of PDCCH, to be monitored according to the SSSG switching indicator is, or (iii) the periodicity of the indicated configuration is longer or shorter the longer a PDCCH skipping duration is indicated by the PDCCH skipping indicator.

According to a tenth aspect, provided is a UE according to any one of the fifth to ninth aspect, wherein the two or more configuration indicators further indicate two or more target synchronization block, SSB, patterns, comprising one or more SSBs out of a set of candidate SSBs, to be used by the UE. Further, the circuitry, in operation, performs SSB-related functions based on the two or more configuration indicators.

According to an eleventh aspect, provided is a UE according to the tenth aspect, wherein the circuitry, in operation, performs the SSB related functions based on the target SSB pattern indicated by the configuration indicator, which indicates the configuration followed by the UE for receiving and/or transmitting the signal.

According to a twelfth aspect, provided is a UE according to the fifth to ninth aspect, wherein each of the two or more configurations is associated with a target synchronization signal block, SSB, pattern, comprising one or more SSBs out of a set of candidate SSBs, to be used by the UE. Further, the circuitry, in operation, performs SSB-related functions based on the target SSB pattern associated with the configuration followed by the UE for receiving and/or transmitting the signal.

According to a thirteenth aspect, provided is a UE according to any one of the fifth to twelfth aspect, wherein the two or more configuration indicators further indicate two or more transmission configuration indication, TCI, states. Further, the circuitry, in operation, receives and/or transmits the signal based on the TCI states.

According to a fourteenth aspect, provided is a UE according to the thirteenth aspect the circuitry, in operation, causes the transceiver to receive and/or transmit the signal based on the TCI state indicated by the configuration indicator indicting the configuration followed by the UE for receiving and/or transmitting the signal.

According to a fifteenth aspect, provided is a UE according to the fifth to twelfth aspect, wherein each of the two or more configurations is associated with a transmission configuration indication, TCI, state. Further, the circuitry, in operation, causes the transceiver to receive and/or transmit the signal based on the TCI state associated with the configuration followed by the UE for receiving and/or transmitting the signal.

According to a sixteenth aspect, provided is a UE according to any one of the first to fifteenth aspect, wherein two or more configurations, indicated by the two or more configuration indicators, are discontinuous reception, DRX, configurations.

According to an seventeenth aspect, provided is a user equipment, UE, comprising a transceiver which, in operation, receives an idle mode discontinuous reception, I-DRX, configuration indicator indicating an I-DRX configuration. The UE further comprises circuitry which, in operation, causes the transceiver to receive and/or transmit a signal during ON periods, in radio resource control, RRC, idle mode, in RRC inactive mode and in RRC connected mode, according to the I-DRX configuration.

According to an eighteenth aspect, provided is a UE according to the seventeenth aspect, wherein the I-DRX configuration indicator includes a timing indicator indicating an active time. The circuitry, in operation, determines ON periods according to the I-DRX configuration and the indicated active time, and causes the transceiver to skip receiving and/or transmitting the signal during periods outside the ON periods.

According to a nineteenth aspect, provided is a UE according to the seventeenth or eighteenth aspect, wherein the transceiver, in operation, receives downlink control information, DCI, indicating whether, when in RRC connected mode, the UE should skip or continue receiving and/or transmitting the signal before each I-DRX cycle according to the I-DRX configuration.

According to a twentieth aspect, provided is a method for a user equipment, UE, comprising the steps of receiving two or more configuration indicators, each indicating a configuration of a periodic timing pattern including ON periods; and receiving and/or transmitting a signal based on the two or more configuration indicators.

According to a twenty-first aspect, provided is a method according to twentieth aspect, wherein two or more configurations, indicated by the two or more configuration indicators, include a first configuration specified for a plurality of UEs served by a cell and a second configuration specified for a subset of the UEs served by the cell, wherein the subset includes the UE.

According to a twenty-second aspect, provided is a method according to the twenty-first aspect, wherein the signal is received and/or transmitted within an overlap period of the ON periods according to the first configuration and the second configuration.

According to a twenty-third aspect, provided is a UE according to the twenty-first aspect, further comprising the step of receiving downlink control information, DCI, indicating one of the first configuration and the second configuration. The signal is received and/or transmitted within an ON period according to the configuration indicated by the DCI.

According to a twenty-fourth aspect, provided is a method according to the twentieth aspect, wherein two or more configurations, indicated by the two or more configuration indicators, are configurations specified for a plurality of UEs served by a cell, including the UE.

According to a twenty-fifth aspect, provided is a method according to the twenty-fourth aspect, further comprising the step of receiving a radio resource control, RRC, message or downlink control information, DCI, wherein the RRC message or the DCI indicates one of the two or more configurations. The signal is received and/or transmitted during an ON period according to the configuration indicated by the RRC message or by the DCI.

According to a twenty-sixth aspect, provided is a method according to the twenty-fourth aspect, further comprising the step if receiving downlink control information, DCI. The signal is received and/or transmitted according to the DCI, wherein the DCI indicates (i) one of the configurations, according to which the signal is to be transmitted and/or received, (ii) at least two configurations, wherein the signal is to be transmitted and/or received within an ON period according to any one of the at least two configurations, or (iii) at least two configurations, wherein the signal is to be transmitted and/or received within an overlap period of the ON periods according to the at least two configurations.

According to a twenty-seventh aspect, provided is a method according to the twentieth aspect, wherein the two or more configurations, indicated by the two or more configuration indicators, are configurations specified for a subset of a plurality of UEs served by a cell, wherein the subset includes the UE. Each of the two or more configurations is associated with a secondary cell, SCell, dormancy configuration, a search space set group, SSSG, or a physical downlink control channel, PDCCH, skipping configuration. The method further comprises the step of receiving downlink control information, DCI, indicating one of the two or more configurations by an SCell dormancy indicator, an SSSG switching indicator, or a PDCCH skipping indicator. The signal is received and/or transmitted during an ON period according to the configuration indicated by the DCI.

According to a twenty-eighth aspect, provided is a method according to the twenty-seventh aspect, wherein (i) the periodicity of the indicated configuration is longer and/or respective ON durations are shorter the more non-dormant SCells are indicated by the SCell dormancy indicator, (ii) the periodicity of the indicated configuration is longer and/or respective ON durations are shorter the higher a temporal density of PDCCH, to be monitored according to the SSSG switching indicator is, or (iii) the periodicity of the indicated configuration is longer or shorter the longer a PDCCH skipping duration is indicated by the PDCCH skipping indicator.

According to a twenty-ninth, provided is a method according to any one of the twenty-fourth to twenty-eighth aspect, wherein the two or more configuration indicators further indicate two or more target synchronization block, SSB, patterns, comprising one or more SSBs out of a set of candidate SSBs, to be used by the UE. Further, the method comprises the step of performing SSB-related functions based on the two or more configuration indicators.

According to a thirtieth aspect, provided is a method according to the twenty-ninth aspect, further comprising the step of performing the SSB related functions based on the target SSB pattern indicated by the configuration indicator, which indicates the configuration followed by the UE for receiving and/or transmitting the signal.

According to a thirty-first aspect, provided is a method according to the twenty-fourth to twenty-eighth aspect, wherein each of the two or more configurations is associated with a target synchronization signal block, SSB, pattern, comprising one or more SSBs out of a set of candidate SSBs, to be used by the UE. Further, the method comprises the step of performing SSB-related functions based on the target SSB pattern associated with the configuration followed by the UE for receiving and/or transmitting the signal.

According to a thirty-second aspect, provided is a method according to any one of the twenty-fourth to thirty-first aspect, wherein the two or more configuration indicators further indicate two or more transmission configuration indication, TCI, states. Further, the signal is received and/or transmitted based on the TCI states.

According to a thirty-third aspect, provided is a method according to the thirty-second aspect, wherein the signal is received and/or transmitted based on the TCI state indicated by the configuration indicator indicting the configuration followed by the UE for receiving and/or transmitting the signal.

According to a thirty-fourth aspect, provided is a method according to the twenty-fourth to thirty-first aspect, wherein each of the two or more configurations is associated with a transmission configuration indication, TCI, state. Further, the signal is received and/or transmitted based on the TCI state associated with the configuration followed by the UE for receiving and/or transmitting the signal.

According to a thirty-fifth aspect, provided is a method according to any one of the twentieth to thirty-fourth aspect, wherein two or more configurations, indicated by the two or more configuration indicators, are discontinuous reception, DRX, configurations.

According to a thirty-sixth aspect, provided is a method for a user equipment, UE, comprising the steps of receiving an idle mode discontinuous reception, I-DRX, configuration indicator indicating an I-DRX configuration, and receiving and/or transmitting a signal during ON periods, in radio resource control, RRC, idle mode, in RRC inactive mode and in RRC connected mode, according to the I-DRX configuration.

According to a thirty-seventh aspect, provided is a method according to the thirty-sixth aspect, wherein the I-DRX configuration indicator includes a timing indicator indicating an active time. The method further comprises the step of determining ON periods according to the I-DRX configuration and the indicated active time; and skipping receiving and/or transmitting the signal during periods outside the ON periods.

According to a thirty-eighth aspect, provided is a method according to the thirty-sixth or thirty-seventh aspect, further comprising the step of receiving downlink control information, DCI, indicating whether, when in RRC connected mode, the UE should skip or continue receiving and/or transmitting the signal before each I-DRX cycle according to the I-DRX configuration.

According to a thirty-ninth aspect, provided is a base station, comprising circuitry which, in operation, determines two or more configurations of a periodic timing pattern including ON periods. The base station further comprises a transceiver which, in operation, transmits two or more configuration indicators indicating the two or more configurations to a user equipment, UE, and receives and/or transmits a signal based on the two or more configurations, from the UE and/or to the UE.

According to a fortieth aspect, provided is a base station according to the thirty-ninth aspect, wherein two or more configurations, indicated by the two or more configuration indicators, include a first configuration specified for a plurality of UEs served by a cell and a second configuration specified for a subset of the UEs served by the cell, wherein the subset includes the UE.

According to a forty-first aspect, provided is a base station according to the fortieth aspect, wherein the transceiver, in operation, receives and/or transmits the signal within an overlap period of the ON periods according to the first configuration and the second configuration.

According to a forty-second aspect, provided is a base station according to the fortieth aspect, wherein the transceiver, in operation, transmits downlink control information, DCI, indicating one of the first configuration and the second configuration. Further, the transceiver, in operation, receives and/or transmits the signal within an ON period according to the configuration indicated by the DCI.

According to a forty-third aspect, provided is a base station according to the thirty-ninth aspect, wherein two or more configurations, indicated by the two or more configuration indicators, are configurations specified for a plurality of UEs served by a cell, including the UE.

According to a forty-fourth aspect, provided is a base station according to the forty-third aspect, wherein the transceiver, in operation, transmits a radio resource control, RRC, message or downlink control information, DCI, wherein the RRC message or the DCI indicates one of the two or more configurations. Further, the transceiver, in operation, receives and/or transmits the signal during an ON period according to the configuration indicated by the RRC message or by the DCI.

According to a forty-fifth aspect, provided is a base station according to the forty-third aspect, wherein the transceiver, in operation, transmits downlink control information, DCI. Further, the transceiver, in operation, receives and/or transmits the signal according to the DCI, wherein the DCI indicates (i) one of the configurations, according to which the signal is to be transmitted and/or received, (ii) at least two configurations, wherein the signal is to be transmitted and/or received within an ON period according to any one of the at least two configurations, or (iii) at least two configurations, wherein the signal is to be transmitted and/or received within an overlap period of the ON periods according to the at least two configurations.

According to a forty-sixth aspect, provided is a base station according to the thirty-ninth aspect, wherein the two or more configurations, indicated by the two or more configuration indicators, are configurations specified for a subset of a plurality of UEs served by a cell, wherein the subset includes the UE. Each of the two or more configurations is associated with a secondary cell, SCell, dormancy configuration, a search space set group, SSSG, or a physical downlink control channel, PDCCH, skipping configuration. The transceiver, in operation, transmits downlink control information, DCI, indicating one of the two or more configurations by an SCell dormancy indicator, an SSSG switching indicator, or a PDCCH skipping indicator. Further, the transceiver, in operation, receives and/or transmits the signal during an ON period according to the configuration indicated by the DCI.

According to a forty-seventh aspect, provided is a base station according to the forty-sixth aspect, wherein the periodicity of the indicated configuration is longer and/or respective ON durations are shorter the more non-dormant SCells are indicated by the SCell dormancy indicator, the periodicity of the indicated configuration is longer and/or respective ON durations are shorter the higher a temporal density of PDCCH, to be monitored according to the SSSG switching indicator is, or the periodicity of the indicated configuration is longer or shorter the longer a PDCCH skipping duration is indicated by the PDCCH skipping indicator.

According to a forty-eighth aspect, provided is a base according to any one of the forty-third to forty-seventh aspect, wherein the two or more configuration indicators further indicate two or more target synchronization block, SSB, patterns, comprising one or more SSBs out of a set of candidate SSBs, to be used by the UE.

According to a forty-ninth aspect, provided is a base station according to any one of the forty-third to forty-seventh aspect, wherein each of the two or more configurations is associated with a target synchronization signal block, SSB, pattern, comprising one or more SSBs out of a set of candidate SSBs, to be used by the UE.

According to a fiftieth aspect, provided is a base station according to any one of the forty-third to forty-ninth aspect, wherein the two or more configuration indicators further indicate two or more transmission configuration indication, TCI, states.

According to a fifty-first aspect, provided is a base station according to the forty-third to forty-ninth aspect, wherein each of the two or more configurations is associated with a transmission configuration indication, TCI, state.

According to a fifty-second aspect, provided is a base station according to the thirty-ninth to fifty-first aspect, wherein two or more configurations, indicated by the two or more configuration indicators, are discontinuous reception, DRX, configurations.

According to a fifty-third aspect, provided is a base station, comprising circuitry which, in operation, determines an idle mode discontinuous reception, I-DRX, configuration. The base station further comprises a transceiver which, in operation, transmits an I-DRX configuration indicator indicating the I-DRX configuration to a user equipment, UE, and receives and/or transmits a signal during ON periods from the UE and/or to the UE, in radio resource control, RRC, idle mode, in RRC inactive mode, and in RRC connected mode, according to the I-DRX configuration.

According to a fifty-fourth aspect, provided is a base station according to the fifty-third aspect, wherein the I-DRX configuration indicator includes a timing indicator indicating an active time. The circuitry, in operation, determines ON periods according to the I-DRX configuration and the indicated active time, and causes the transceiver to skip receiving and/or transmitting the signal during periods outside the ON periods.

According to a fifty-fifth aspect, provided is a base station according to the fifty-third or fifty-fourth aspect, wherein the transceiver, in operation, transmits downlink control information, DCI, indicating whether, when in RRC connected mode, the UE should skip or continue receiving and/or transmitting the signal before each I-DRX cycle according to the I-DRX configuration.

According to a fifty-sixth aspect, provided is a method for a base station, comprising the steps of determining two or more configurations of a periodic timing pattern including ON periods; transmitting two or more configuration indicators indicating the two or more configurations to a user equipment, UE; and receiving and/or transmitting a signal based on the two or more configurations, from the UE and/or to the UE

According to a fifty-seventh aspect, provided is a method according to the fifty-sixth aspect, wherein two or more configurations, indicated by the two or more configuration indicators, include a first configuration specified for a plurality of UEs served by a cell and a second configuration specified for a subset of the UEs served by the cell, wherein the subset includes the UE.

According to a fifty-eighth aspect, provided is a method according to the fifty-seventh aspect, wherein the signal is received and/or transmitted within an overlap period of the ON periods according to the first configuration and the second configuration.

According to a fifty-ninth aspect, provided is a method according to the fifty-seventh aspect, further comprising the step of transmitting downlink control information, DCI, indicating one of the first configuration and the second configuration. Further, the signal is received and/or transmitted within an ON period according to the configuration indicated by the DCI.

According to a sixtieth aspect, provided is a method according to the fifty-sixth aspect, wherein two or more configurations, indicated by the two or more configuration indicators, are configurations specified for a plurality of UEs served by a cell, including the UE.

According to a sixty-first aspect, provided is a method according to the sixtieth aspect, further comprising the step of transmitting a radio resource control, RRC, message or downlink control information, DCI, wherein the RRC message or the DCI indicates one of the two or more configurations. The signal is received and/or transmitted during an ON period according to the configuration indicated by the RRC message or by the DCI.

According to a sixty-second aspect, provided is a method according to the sixtieth aspect, further comprising the step of transmitting downlink control information, DCI. The signal is received and/or transmitted according to the DCI, wherein the DCI indicates (i) one of the configurations, according to which the signal is to be transmitted and/or received, (ii) at least two configurations, wherein the signal is to be transmitted and/or received within an ON period according to any one of the at least two configurations, or (iii) at least two configurations, wherein the signal is to be transmitted and/or received within an overlap period of the ON periods according to the at least two configurations.

According to a sixty-third aspect, provided is a method according to the fifty-sixth aspect, wherein the two or more configurations, indicated by the two or more configuration indicators, are configurations specified for a subset of a plurality of UEs served by a cell, wherein the subset includes the UE. Each of the two or more configurations is associated with a secondary cell, SCell, dormancy configuration, a search space set group, SSSG, or a physical downlink control channel, PDCCH, skipping configuration. The method further comprises the step of transmitting downlink control information, DCI, indicating one of the two or more configurations by an SCell dormancy indicator, an SSSG switching indicator, or a PDCCH skipping indicator. The signal is received and/or transmitted during an ON period according to the configuration indicated by the DCI.

According to a sixty-fourth aspect, provided is a method according to the sixty-third aspect, wherein the periodicity of the indicated configuration is longer and/or respective ON durations are shorter the more non-dormant SCells are indicated by the SCell dormancy indicator, the periodicity of the indicated configuration is longer and/or respective ON durations are shorter the higher a temporal density of PDCCH, to be monitored according to the SSSG switching indicator is, or the periodicity of the indicated configuration is longer or shorter the longer a PDCCH skipping duration is indicated by the PDCCH skipping indicator.

According to a sixty-fifth aspect, provided is a method according to any one of the sixtieth to sixty-fourth aspect, wherein the two or more configuration indicators further indicate two or more target synchronization block, SSB, patterns, comprising one or more SSBs out of a set of candidate SSBs, to be used by the UE.

According to a sixty-sixth aspect, provided is a method according to any one of the sixtieth to sixty-fourth aspect, wherein each of the two or more configurations is associated with a target synchronization signal block, SSB, pattern, comprising one or more SSBs out of a set of candidate SSBs, to be used by the UE.

According to a sixty-seventh, provided is a method according to any one of the sixtieth to sixty-sixth aspect, wherein the two or more configuration indicators further indicate two or more transmission configuration indication, TCI, states.

According to a sixty-eighth aspect, provided is a base station according to the sixtieth to sixty-sixth aspect, wherein each of the two or more configurations is associated with a transmission configuration indication, TCI, state.

According to a sixty-ninth aspect, provided is a method according to the fifty-sixth to sixty-eighth aspect, wherein two or more configurations, indicated by the two or more configuration indicators, are discontinuous reception, DRX, configurations.

According to a seventieth aspect, provided is a method for a base station, comprising the steps of determining an idle mode discontinuous reception, I-DRX, configuration; transmitting an I-DRX configuration indicator indicating the I-DRX configuration to a user equipment, UE; and receiving and/or transmitting a signal during ON periods from the UE and/or to the UE, in radio resource control, RRC, idle mode, in RRC inactive mode, and in RRC connected mode, according to the I-DRX configuration.

According to a seventy-first aspect, provided is a method according to the seventieth aspect, wherein the I-DRX configuration indicator includes a timing indicator indicating an active time. The method further comprises the steps of determining ON periods according to the I-DRX configuration and the indicated active time; and skipping receiving and/or transmitting the signal during periods outside the ON periods.

According to a seventy-second aspect, provided is a method according to the seventieth or seventy-first aspect, further comprising the step of transmitting downlink control information, DCI, indicating whether, when in RRC connected mode, the UE should skip or continue receiving and/or transmitting the signal before each I-DRX cycle according to the I-DRX configuration.

Summarizing, some exemplary embodiments relate to a user equipment, UE, a base station and respective methods for a UE and a base station. For example, the UE comprises a transceiver which, in operation, receives two or more configuration indicators, each indicating a configuration of a periodic timing pattern including ON periods. The UE. For example, further comprises circuitry which, in operation, causes the transceiver to receive and/or to transmit a signal based on the two or more configuration indicators. In another example, the UE comprises a transceiver which, in operation, receives an idle mode discontinuous reception, I-DRX, configuration indicator indicating an I-DRX configuration. The UE, for example, further comprises circuitry which, in operation, causes the transceiver to receive and/or transmit a signal during ON periods, in radio resource control, RRC, idle mode, in RRC inactive mode and in RRC connected mode, according to the I-DRX configuration.

## Claims

1. A user equipment, UE, comprising
a transceiver which, in operation, receives two or more configuration indicators, each indicating a configuration of a periodic timing pattern including ON periods; and
circuitry which, in operation, causes the transceiver to receive and/or to transmit a signal based on the two or more configuration indicators.

2. The UE according to claim 1, wherein
two or more configurations, indicated by the two or more configuration indicators, include a first configuration specified for a plurality of UEs served by a cell and a second configuration specified for a subset of the UEs served by the cell, wherein the subset includes the UE.

3. The UE according to claim 2, wherein
the circuitry, in operation, causes the transceiver to receive and/or transmit the signal within an overlap period of the ON periods according to the first configuration and the second configuration.

4. The UE according to claim 2, wherein
the transceiver, in operation, receives downlink control information, DCI, indicating one of the first configuration and the second configuration; and
the circuitry, in operation, causes the transceiver to receive and/or transmit the signal within an ON period according to the configuration indicated by the DCI.

5. The UE according to claim 1, wherein
two or more configurations, indicated by the two or more configuration indicators, are configurations specified for a plurality of UEs served by a cell, including the UE.

6. The UE according to claim 5, wherein
the transceiver, in operation, receives a radio resource control, RRC, message or downlink control information, DCI, wherein the RRC message or the DCI indicates one of the two or more configurations; and
the circuitry, in operation, causes the transceiver to receive and/or transmit the signal during an ON period according to the configuration indicated by the RRC message or by the DCI.

7. The UE according to claim 5, wherein
the transceiver, in operation, receives downlink control information, DCI; and
the circuitry, in operation, causes the transceiver to receive and/or transmit the signal according to the DCI, wherein
the DCI indicates
• one of the configurations, according to which the signal is to be transmitted and/or received,
• at least two configurations, wherein the signal is to be transmitted and/or received within an ON period according to any one of the at least two configurations, or
• at least two configurations, wherein the signal is to be transmitted and/or received within an overlap period of the ON periods according to the at least two configurations.

8. The UE according to claim 1, wherein
the two or more configurations, indicated by the two or more configuration indicators, are configurations specified for a subset of a plurality of UEs served by a cell, wherein the subset includes the UE;
each of the two or more configurations is associated with a secondary cell, SCell, dormancy configuration, a search space set group, SSSG, or a physical downlink control channel, PDCCH, skipping configuration;
the transceiver, in operation, receives downlink control information, DCI, indicating one of the two or more configurations by an SCell dormancy indicator, an SSSG switching indicator, or a PDCCH skipping indicator; and
the circuitry, in operation, causes the transceiver to receive and/or transmit the signal during an ON period according to the configuration indicated by the DCI.

9. The UE according to claim 8, wherein
the periodicity of the indicated configuration is longer and/or respective ON durations are shorter the more non-dormant SCells are indicated by the SCell dormancy indicator,
the periodicity of the indicated configuration is longer and/or respective ON durations are shorter the higher a temporal density of PDCCH, to be monitored according to the SSSG switching indicator is, or
the periodicity of the indicated configuration is longer or shorter the longer a PDCCH skipping duration is indicated by the PDCCH skipping indicator.

10. The UE according to any one of claims 1 to 8, wherein
two or more configurations, indicated by the two or more configuration indicators, are discontinuous reception, DRX, configurations.

11. A user equipment, UE, comprising
a transceiver which, in operation, receives an idle mode discontinuous reception, I-DRX, configuration indicator indicating an I-DRX configuration; and
circuitry which, in operation, causes the transceiver to receive and/or transmit a signal during ON periods, in radio resource control, RRC, idle mode, in RRC inactive mode and in RRC connected mode, according to the I-DRX configuration.

12. The UE according to claim 11, wherein
the I-DRX configuration indicator includes a timing indicator indicating an active time;
the circuitry, in operation,
determines ON periods according to the I-DRX configuration and the indicated active time, and
causes the transceiver to skip receiving and/or transmitting the signal during periods outside the ON periods.

13. The UE according to claim 11 or 12, wherein
the transceiver, in operation, receives downlink control information, DCI, indicating whether, when in RRC connected mode, the UE should skip or continue receiving and/or transmitting the signal before each I-DRX cycle according to the I-DRX configuration.

14. A base station, comprising
circuitry which, in operation, determines two or more configurations of a periodic timing pattern including ON periods; and
a transceiver which, in operation,
transmits two or more configuration indicators indicating the two or more configurations to a user equipment, UE; and
receives and/or transmits a signal based on the two or more configurations, from the UE and/or to the UE.

15. A base station, comprising
circuitry which, in operation, determines an idle mode discontinuous reception, I-DRX, configuration; and
a transceiver which, in operation,
transmits an I-DRX configuration indicator indicating the I-DRX configuration to a user equipment, UE, and
receives and/or transmits a signal during ON periods from the UE and/or to the UE, in radio resource control, RRC, idle mode, in RRC inactive mode, and in RRC connected mode, according to the I-DRX configuration.
